Europäisches Patentamt

European Patent Office

Office européen des brevets

(19)

(11) **EP 1 415 202 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(51) Int Cl.7: **G03H 1/08**, G03H 1/04, G03H 1/28

(21) Anmeldenummer: **02758403.6**

(22) Anmeldetag: **26.07.2002**

(86) Internationale Anmeldenummer:
**PCT/EP2002/008373**

(87) Internationale Veröffentlichungsnummer:
**WO 2003/014837 (20.02.2003 Gazette 2003/08)**

(54) **VERFAHREN ZUM BERECHNEN VON MEHRSCHICHTHOLOGRAMMEN, VERFAHREN ZUM HERSTELLEN VON MEHRSCHICHTHOLOGRAMMEN UND SPEICHERMEDIUM MIT EINEM MEHRSCHICHTHOLOGRAMM**

METHODS FOR CALCULATING MULTILAYER HOLOGRAMS, METHOD FOR PRODUCING MULTILAYER HOLOGRAMS AND STORAGE MEDIUM COMPRISING A MULTILAYER HOLOGRAM

PROCEDE DE CALCUL D'HOLOGRAMMES A PLUSIEURS COUCHES, PROCEDE DE PRODUCTION D'HOLOGRAMMES A PLUSIEURS COUCHES ET SUPPORT D'ENREGISTREMENT COMPRENANT UN HOLOGRAMME A PLUSIEURS COUCHES

(84) Benannte Vertragsstaaten:
**DE ES FR GB IT**

(30) Priorität: **26.07.2001 DE 10136088**

(43) Veröffentlichungstag der Anmeldung:
**06.05.2004 Patentblatt 2004/19**

(73) Patentinhaber: **tesa scribos GmbH**
**69126 Heidelberg (DE)**

(72) Erfinder:
 • **NOEHTE, Steffen**
  **69469 Weinheim (DE)**
 • **DIETRICH, Christoph**
  **69126 Heidelberg (DE)**
 • **GERSPACH, Matthias**
  **69221 Dossenheim (DE)**
 • **KRESSE, Tobias**
  **20359 Hamburg (DE)**
 • **BORGSMÜLLER, Stefan**
  **69115 Heidelberg (DE)**

(74) Vertreter: **Rox, Thomas**
**COHAUSZ & FLORACK**
**Patent- und Rechtsanwälte**
**Bleichstrasse 14**
**40211 Düsseldorf (DE)**

(56) Entgegenhaltungen:
**US-A- 5 568 574        US-A- 5 768 242**
**US-B1- 6 267 515**

 • **STANKUS J J ET AL: "ELECTRIC-FIELD-SWITCHABLE STRATIFIED VOLUME HOLOGRAMS IN PHOTOREFRACTIVE POLYMERS" OPTICS LETTERS, OPTICAL SOCIETY OF AMERICA, WASHINGTON, US, Bd. 19, Nr. 18, 15. September 1994 (1994-09-15), Seiten 1480-1482, XP000445468 ISSN: 0146-9592**
 • **JOHNSON R V ET AL: "Stratified volume holographic optical elements" OPTICS LETTERS, MARCH 1988, USA, Bd. 13, Nr. 3, Seiten 189-191, XP002221773 ISSN: 0146-9592**
 • **ICHIKAWA H ET AL: "Thin grating decomposition method applied to hybrid holograms" WORKSHOP ON DIGITAL HOLOGRAPHY, PRAGUE, CZECHOSLOVAKIA, 19-21 MAY 1992, Bd. 1718, Seiten 100-106, XP001120623 Proceedings of the SPIE - The International Society for Optical Engineering, 1993, USA ISSN: 0277-786X**
 • **SOROKO L. M. : "Holography and coherent optics" , PLENUM PRESS , NEW YORK XP002221775 Absatz [7.24]**

**Beschreibung**

Die Erfindung betrifft ein Verfahren zum Berechnen von Mehrschichthologrammen, ein Verfahren zum Herstellen von Mehrschichthologrammen sowie ein holographisches Speichermedium mit einem nach diesem Verfahren hergestellten Mehrschichthologramm. Insbesondere handelt es sich bei den Mehrschichthologrammen um sogenannte computergenerierte Mehrschichthologramme. Diese weisen spezielle Eigenschaften auf, die in zahlreichen Anwendungen, insbesondere als Sicherheitsmerkmale eingesetzt werden können. Die Eigenschaften sind insbesondere Winkelselektivität, Wellenlängenselektivität, Blazing (nur eine Ordnung ist sichtbar), Phasenselektivität und weitere.

Aus dem Stand der Technik des Erzeugens von Hologrammen sind verschiedene experimentelle Techniken bekannt. Zu nennen sind dabei einerseits experimentell erzeugte Mehrschichthologramme und andererseits Volumenhologramme.

Aus dem Artikel aus Optica Acta, 1986, Vol. 33, No. 3, Seite 255-268 sind experimentell aufgenommenen Zweischichthologramme bekannt. Dazu werden zwei dünne photosensitive Schichten (8 μm) auf den gegenüberliegenden Seiten einer dicken Glasplatte (1,34 mm) aufgebracht. Diese Glasplatte wird dann mit zwei ebenen Wellen, die einen gewissen Winkel zueinander haben, beleuchtet. Das entwickelte Hologramm wird mit Auslesewellen beleuchtet, die sowohl im Winkel als auch in der Wellenlänge variiert werden. Die in diesem Artikel entwickelte Theorie beruht auf Zerlegung eines Sinusgitters in Besselfunktionen und stimmt sehr gut mit dem Experiment überein. Die so hergestellten Zweischichthologramme zeigen eine höhere Beugungseffizienz als die theoretische Grenze für einschichtige Hologramme zulässt. Sie zeigen eine hohe Winkel- und Wellenlängenselektivität, die jedoch periodisch ist. Sie zeigen keinen Blazing Effekt, das heißt, positive und negative Ordnungen sind in der Intensität von der gleichen Größenordnung. Als Anwendung wird ein Analog-Digital-Wandler vorgestellt, der vor allem auf der Eigenschaft der Winkelselektivität beruht.

Volumenhologramme zeigen viele Eigenschaften, die in Anwendungen verwertbar sind. Sie können jedoch bisher weder geschlossen berechnet werden noch ist eine Möglichkeit bekannt, ein berechnetes Volumenhologramm in ein voluminöses Trägermaterial zu belichten. Aus diesem Grund müssen sie experimentell belichtet werden, was alle Nachteile der experimentellen Holographie mit sich bringt.

Dünne computergenerierte Hologramme können auf bekannte Weise berechnet und in einfacher Weise belichtet werden, besitzen jedoch wichtige Eigenschaften nicht, die von Volumenhologrammen bekannt sind.

Mehrschichthologramme zeigen ganz ähnliche Eigenschaften wie Volumenhologramme. Sie können in ähnlicher Weise wie die dünnen Hologramme belichtet werden. Es fehlt jedoch bisher ein geeignetes Verfahren, solche Hologramme zu berechnen.

Der Erfindung liegt daher das technische Problem zugrunde, erstmals ein Verfahren zum Berechnen von Mehrschichthologrammen anzugeben, das die zuvor aufgezeigten Probleme löst, sowie ein computergeneriertes Einschreiben eines Mehrschichthologramms zu ermöglichen.

Das zuvor aufgezeigte technische Problem wird durch ein Verfahren zum Berechnen eines computergenerierten Mehrschichthologramms nach Anspruch 1, durch ein Verfahren zum Herstellen eines computergenerierten Mehrschichthologramms gemäß Anspruch 25, durch ein Verfahren zum Auslesen eines Mehrschichthologramms nach Anspruch 35 sowie durch ein Speichermedium mit den Merkmalen des Anspruches 39 gelöst. Weitere vorteilhafte Ausgestaltungen sind in den jeweiligen Unteransprüchen angegeben.

Die im folgenden beschriebenen computergenerierten Mehrschichthologramme können auch als computer-generated stratified diffractive optical elements (SDOE) bezeichnet werden. Denn die Mehrschichthologramme können nicht nur für eine Wiedergabe von Informationen verwendet werden, sondern sie können auch als strahlformende optische Elemente verwendet werden. Dennoch wird anstelle des allgemeinen Begriffes der optischen Elementen im folgenden jeweils von Hologrammen bzw. Mehrschichthologrammen gesprochen. Es wird jedoch hervorgehoben, dass die Erfindung allgemein strahlformende optische Elemente betrifft, die unabhängig von holographischen Informationsträgern sind.

Die Hologramme sind nicht auf Auslesewellen mit einer Wellenlänge im sichtbaren Bereich des Lichtes beschränkt. Ebenso sind Auslesewellen mit Wellenlängen im Infrarotbereich (IR), Ultraviolettbereich (UV), Röntgenbereich oder als Elektronenstrahl möglich. Dennoch wird im folgenden der Anschauung halber die Begriffe Lichtwelle bzw. Lichtfeld verwendet, was aber nicht als Beschränkung der Erfindung auf diese Art von Auslesewelle zu verstehen ist.

Durch die Erfindung können die folgenden Vorteile der Mehrschichthologramme ausgenutzt werden:

Winkelselektivität: Die Winkelselektivität kann durch das Winkelmultiplexing ausgenutzt werden, d.h. es können mehrere Datenseiten in ein Mehrschichthologramm einberechnet werden, die dann in der Rekonstruktion unter verschiedenen Einfallswinkeln des Auslesestrahls erscheinen.

Wellenlängenselektivität: Die Wellenlängenselektivität kann durch das Wellenlängenmultiplexing ausgenutzt werden, d.h. es können mehrere Datenseiten in ein Mehrschichthologramm einberechnet werden, die dann in der Rekonstruktion unter verschiedenen Wellenlängen des Auslesestrahls erscheinen.

**EP 1 415 202 B1**

Phasenselektivität: Die Phasenselektivität kann durch das Phasenmultiplexing ausgenutzt werden, d.h. es können mehrere Datenseiten in ein Mehrschichthologramm einberechnet werden, die dann in der Rekonstruktion unter verschiedenen Phasenfronten des Auslesestrahls erscheinen. Phasenselektivität ist sowohl von dünnen als auch von Volumenhologrammen bekannt.

Amplitudenselektivität: Die Amplitudenverteilungen verschiedener Auslesestrahlen können variieren und zu verschiedenen Berechnungen der Einzelhologramme führen. Dieser Umstand kann eingesetzt werden, um für verschiedene räumliche Amplitudenverteilungen der Auslesestrahlen ein Multiplexing in ein Mehrschichthologramm einzuberechnen. Verschiedene räumliche Amplitudenverteilungen können bspw. eine Gauß'sche Verteilung oder eine Rechteckverteilung der Amplitude sein. Es ist auch möglich, nur einzelne Bereiche des Mehrschichthologramms für eine Amplitudenselektivität auszuleuchten.

Die oben genannten Effekte können nun auch kombiniert werden was insbesondere durch die Verwendung computergenerierter Hologramme realisiert werden kann, da hier die Anteile beliebig gemischt, bzw. hierarchisch abgelegt werden können. Das bedeutet, dass zur Rekonstruktion zwei Eigenschaften des Auslesestrahls erfüllt sein müssen. Diese Kombinationen lassen sich besonders durch computergenerierte Hologramme mit optimierten Berechnungsverfahren nutzen wie es in konventionellen Volumenhologrammen nicht möglich ist.

Blazing: Mehrschichthologramme zeigen den Effekt des Blazings, das heißt in der Rekonstruktion erscheint nur eine Ordnung. Dies gilt selbst für binäre Mehrschichthologramme. Blazing ist zwar auch von dünnen Hologrammen bekannt, jedoch nur von dünnen Grauwertphasenhologrammen (Kinoforms), nicht von binären dünnen Hologrammen.

Mehrschichthologramme zeigen weitere Eigenschaften, die weder von dünnen, noch von Volumenhologrammen bekannt sind:

In der Rekonstruktion ergibt sich unter bestimmten Bedingungen nicht nur die berechnete Rekonstruktion, sondern mit ihr überlagert die Rekonstruktionen der Hologramme der einzelnen Schichten. In diesem Fall überlagern sich die Informationen, die in den einzelnen Schichten gespeichert sind mit der Information, die sich aus dem Schichtaufbau ergibt.

Trennt man die einzelnen Schichten, so ergibt sich aus den einzelnen Hologrammen unter bestimmten Bedingungen keine verwertbare Information.

Mehrschichthologramme können so berechnet werden, dass sich bei der Abtrennung oder Ausschaltung bzw. beim Hinzufügen oder Einschalten einer oder mehrerer Schichten eine andere Rekonstruktion ergibt.

Diese Eigenschaften können insbesondere auf dem Gebiet der Sicherheitshologramme/ Datenhologramme/ Identifizierungshologramme ausgenutzt werden.

Mehrschichthologramme eignen sich jedoch auch für jede Art der Strahlformung und für viele Einsatzgebiete der dünnen computergenerierten Hologramme und der Volumenhologramme.

Im folgenden wird die Erfindung anhand von Ausführungsbeispielen beschrieben, wobei auf die beigefügte, Zeichnung Bezug genommen wird. In der Zeichnung zeigen

Fig. 1    eine schematische Darstellung eines Mehrschichthologramms mit eingezeichneten Lichtfeldern,

Fig. 2    einen Ausschnitt aus dem in Fig. 1 dargestellten Schema,

Fig. 3    eine schematische Darstellung einer Berechnung eines Mehrschichthologramms mit Multiplexingeigenschaften, das aus drei separaten Raumbereichen zusammengesetzt wird,

Fig. 4    eine schematische Darstellung der geometrischen Größenordnungen für zwei Hologramme eines Mehrschichthologramms,

Fig. 5    die Darstellung eines zu rekonstruierenden Bildes für die in Fig. 6 dargestellten Anwendungen,

Fig. 6    verschiedene Rekonstruktionen von Mehrschichthologrammen und Einzelhologrammen eines Mehrschichthologramms,

Fig. 7    eine Anwendung eines verschlüsselten Mehrschichthologramms,

Fig. 8    eine schematische Darstellung der Winkel- und Wellenlängenselektivität,

Fig. 9    eine schematische Darstellung der Winkel- und Wellenlängenselektivität eines gemultiplexten Mehrschichthologramms und

Fig. 10    eine schematische Darstellung von Mehrschichthologrammen mit einer teilreflektierenden Schicht.

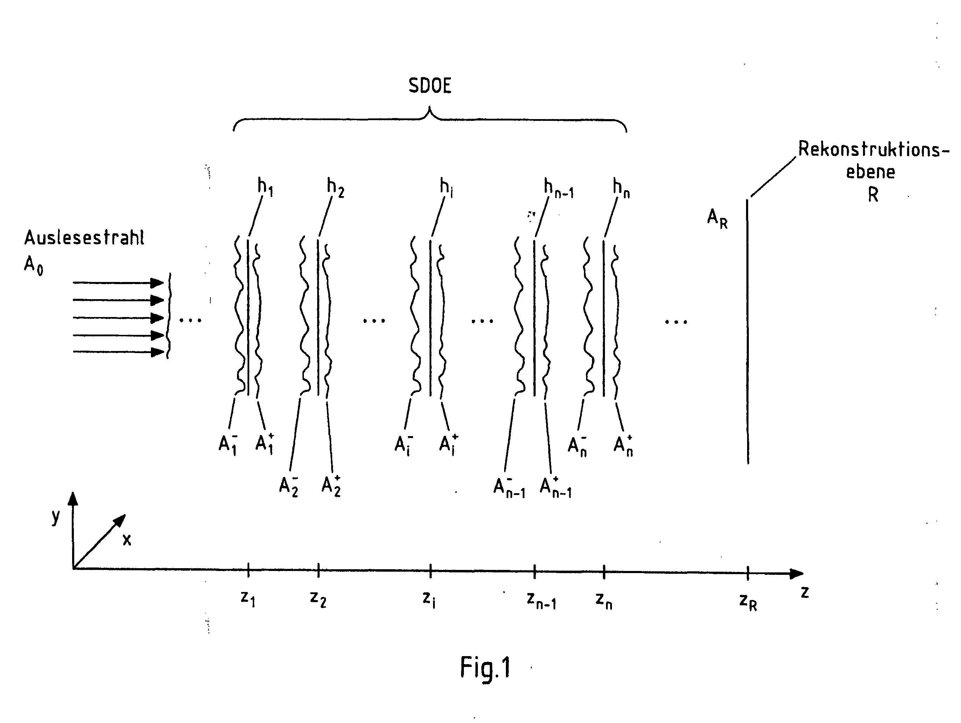

Fig. 1 zeigt eine schematische Darstellung einer Lichtwelle, die durch ein Mehrschichthologramm (SDOE) verläuft und dabei schrittweise verändert wird. Es wird nochmals hervorgehoben, dass die Erfindung nicht auf Lichtwelle als Auslesewellen beschränkt ist, sondern dass auch andere Wellenlängenbereiche als der sichtbare Bereich zur Anwendung kommen können. Dennoch wird im folgenden der Anschauung halber der Wellenlängenbereich des Lichtes für die Beschreibung der Ausführungsbeispiele verwendet.

Das Mehrschichthologramm weist mindestens zwei Hologramme $h_k$ auf, allgemein sind in Fig. 1 n Hologramme $h_1$ bis $h_n$ dargestellt, die parallel und mit geringem Abstand zueinander angeordnet sind. In der zum Mehrschichthologramm beabstandeten Rekonstruktionsebene R entsteht dann die Rekonstruktion. Mit z wird die Ausbreitungsrichtung des Auslesestrahls beschrieben, wobei die einzelnen Positionen der Hologramme $h_k$ mit $z_k$ und die Position der Rekonstruktionsebene mit $z_R$ dargestellt sind. Die weiteren Koordinaten x und y verlaufen senkrecht zur dargestellten z-Richtung in Fig. 1.

Diese Definition eines Koordinatensystems bezüglich der Ausbreitungsrichtung z und der Ausrichtung der Hologramme senkrecht dazu stellt keine Beschränkung der Erfindung dar, sondern dient ausschließlich einer besseren Verständlichkeit der nachfolgenden mathematischen Beschreibung. Es ist nicht notwendig, dass die Ausbreitungsrichtung des Auslesestrahls senkrecht zu den Oberflächen der einzelnen Hologramme verläuft. Auch ist es nicht erforderlich, dass die einzelnen Hologramme parallel zueinander und senkrecht zur z-Richtung ausgerichtet sind. Denn sowohl ein weiter unten beschriebenes Winkelmultiplexing als auch die Möglichkeit, die Hologramme im Winkel zueinander anzuordnen, ist von der vorliegenden Erfindung umfasst.

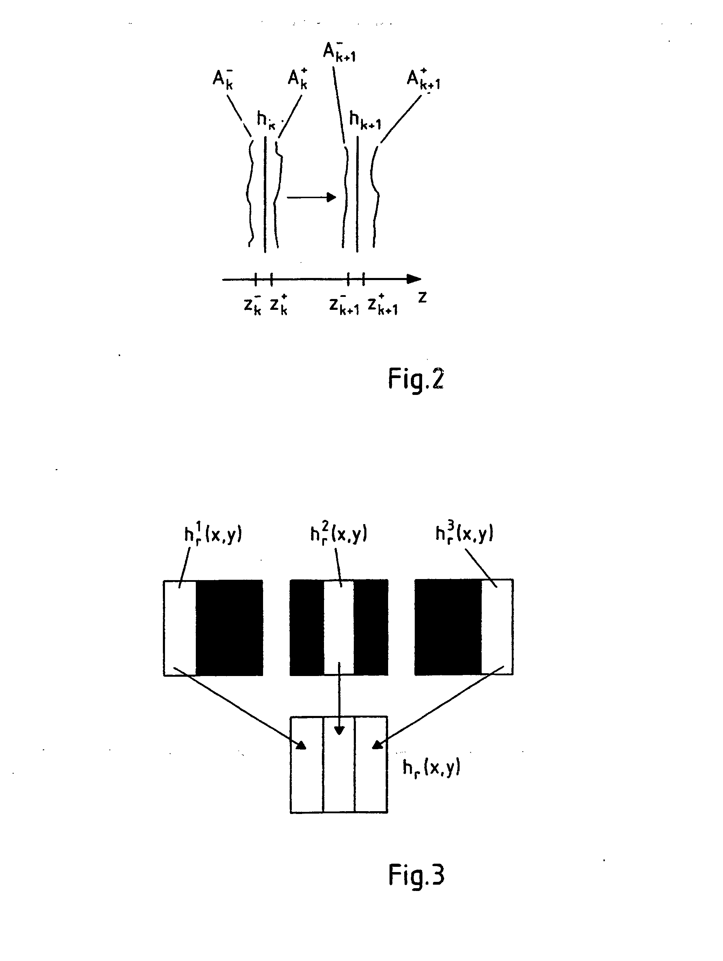

Im folgenden wird weiterhin eine spezielle Nomenklatur verwendet, bei der in Ausbreitungsrichtung (z-Richtung) vor einem Hologramm $h_k$ das Lichtfeld $A_k^-$ bzw. $A_k(x,y,z^-)$ und hinter dem Hologramm $h_k$ das Lichtfeld $A_k^+$ bzw. $A_k(x,y,z^+)$ vorliegt. Dieses ist auch in Fig. 2 näher dargestellt. Darüber hinaus ist das Ausgangslichtfeld mit $A_0(x,y,z)$ und das Lichtfeld in der Rekonstruktionsebene mit $A_R(x,y,z)$ gekennzeichnet.

Die Berechnung der Lichtfelder an unterschiedlichen Positionen innerhalb des Ausbreitungsweges werden für kurze Distanzen, beispielsweise zwischen jeweils zwei Hologrammen durch die exakte, aber aufwändige Methode der Nahfeldtransformation (NFT) berechnet, während die Berechnung der Lichtfelder über größere Distanzen durch die weniger aufwändige Fraunhofer-Näherung (Fouriertransformation durch im Strahlengang angeordnete Linse) oder durch die Fresnel-Näherung erfolgt.

Die einzelnen Hologramme $h_k$ im Schichtaufbau können Amplituden-, Phasen- oder gemischte Hologramme sein. Sie können binär oder grauwertig sein. Dadurch stellt jedes einzelne Hologramm $h_k$ eine komplexwertige Funktion dar. Mit dieser Funktion beeinflusst das einzelne Hologramm die ankommende Wellenfront bzw, das Lichtfeld $A_k(x,y,z^-)$. Dann gilt für die Wellenfront bzw. das Lichtfeld $A_k(x,y,z^+)$, das hinter dem Hologramm $h_k$ entsteht:

$$A_k(x,y,z^+) = h_k\, A_k(x,y,z^-).$$

Mathematisch lässt sich dieses folgendermaßen formulieren.

Licht besteht aus Amplitude und Phase. Die Amplitude bestimmt die Intensität des Lichts, die Phase wie die Wellenfront im Raum liegt. Dies wird mathematisch durch eine komplexwertige Funktion dargestellt. Das Lichtfeld A im Punkt (x,y,z) im Raum ist:

$$(1) \quad A(x,y,z) = \left|A(x,y,z)\right| \exp\!\left(i\Phi_A(x,y,z)\right)$$

Hierbei ist A die Amplitude und $\Phi$ die Phasenlage des Lichts im Punkt (x,y,z), i ist Konstante der komplexen Zahlen (Wurzel aus -1). Aus dieser Darstellung ergeben sich alle Rechenregeln für die Optik.

Hologramme $h_k$, die sowohl die Amplitude als auch die Phase beeinflussen lassen, sich dann durch eine komplexwertige Funktion ausdrücken.

$$(2) \quad h_k(x,y) = \left|h_k(x,y)\right| \exp\!\left(i\Phi_k(x,y)\right); k = 1...n$$

Trifft ein Lichtfeld $A_k(x,y,z)$ auf z.B. ein reines Amplitudenhologramm $h_k(x,y)$, so wird dieses durch das Hologramm teilweise absorbiert, d.h. die Amplitude wird abgeschwächt. Dies wird dargestellt durch eine Multiplikation mit der Hologrammfunktion $h_k(x,y)$, die die Abschwächung als Funktion des Ortes angibt. $h_k(x,y)$ ist dabei reell, d.h. es gibt keine $\exp(i\Phi)$ Funktion, da das Hologramm die Phase nicht beeinflusst. Das Feld $A_k(x,y,z^+)$ kurz hinter dem Hologramm $h_k(x,y)$ kann also mit dem Feld $A_k(x,y,z^-)$ kurz vor dem Hologramm $h_k(x,y,)$ in Beziehung gesetzt werden:

$$(3) \quad A_k(x,y,z^+) = \left(h_k(x,y)\left|A_k(x,y,z^-)\right|\right)\exp\left(i\Phi_A(x,y,z^-)\right)$$

Das bedeutet, dass das Hologramm h(x,y) nur die Amplitude |A(x,y,z⁻)| beeinflusst und die Phase $\Phi_A$ unverändert bleibt.

Ein reines Phasenhologramm "schiebt" nur die Phase der Lichtwelle A(x,y,z), lässt die Amplitude hingegen unverändert. Dies wird mathematisch ebenfalls durch eine Multiplikation beschrieben:

$$(4) \quad A(x,y,z^+) = \left|A(x,y,z^-)\right|\exp\left(i\left(\Phi_A(x,y,z^-) + \Phi_k(x,y)\right)\right)$$

Die Phase des Lichtfeldes A(x,y,z) wird um $\Phi_k$ verschoben, die Amplitude bleibt unverändert.

Trifft ein Lichtfeld A(x,y,z) auf ein gemischtes Hologramm $h_k$(x,y), das sowohl eine Amplitudenveränderung als auch eine Phasenänderung bewirkt, so ergibt sich

$$(5) \quad A(x,y,z^+) = \left(h_k(x,y)\left|A(X,y,z^-)\right|\right)\exp\left(i\left(\Phi_A(x,y,z^-) + \Phi_k(x,y)\right)\right)$$

Das Hologramm schwächt also die Amplitude ab und schiebt die Phase des Lichtfeldes.

Möchte man nun das Lichtfeld vor dem Hologramm aus dem Lichtfeld hinter dem Hologramm und der Hologrammfunktion berechnen ("reverse engineering"), so verwendet man die komplexe Division als Umkehrung der Multiplikation:

$$(6) \quad A(x,y,z^-) = \left(\left|A(x,y,z^+)\right|/h_k(x,y)\right)\exp\left(i\left(\Phi_A(x,y,z^+) - \Phi_k(x,y)\right)\right)$$

Man beachte das Minuszeichen im Exponenten. Das Lichtfeld hinter dem Hologramm wird in diesem Fall durch die Hologrammfunktion verstärkt, und die Phase wird "zurückgeschoben".

Im folgenden wird das erfindungsgemäße Verfahren zum Berechnen eines Mehrschichtholgramms beschrieben.

Wie in Fig. 1 dargestellt befinden sich im Schichtaufbau des Mehrschichtholograms n Hologramme $h_k$. Im ersten Schritt werden zunächst n-1 Hologramme beliebig festgelegt. Dann wird das nicht festgelegte Hologramm $h_i$(x, y) berechnet. Des weiteren wird die gewünschte Rekonstruktion (das Lichtfeld $A_R$(x,y,$z_R$)) in der Rekonstruktionsebene festgelegt, also die Intensitätsverteilung, die der aus dem Mehrschichthologramm zu reproduzierenden Information entspricht bzw. mit geringen Abweichungen entsprechen soll. Schließlich ist das Lichtfeld $A_0$(x,y,z) des Auslesestrahls bekannt. Insbesondere handelt es sich dabei um eine ebene Welle eines Laserstrahls.

Zunächst wird berechnet, welches Lichtfeld vor der Ebene des zu berechnenden Hologramms $h_i$ durch das Ausleselichtfeld $A_0$(x,y,z) und durch die davor liegenden Hologramme $h_i$ bis $h_i$ entsteht ("Forward Engineering").

Dazu wird das Lichtfeld $A_1$(x,y,z⁻) der Auslesewelle vor der Ebene des ersten Hologramms $h_1$ berechnet. Dieses Lichtfeld wird mit der komplexwertigen Funktion des ersten Hologramms $h_1$(x,y) gemäß Gleichung 5 multipliziert. Dadurch ergibt sich das Lichtfeld $A_1$(x,y,z⁺) hinter dem ersten Hologramm $h_1$(x,y).

Vom Lichtfeld $A_1$(x,y,z⁺) aus wird das Lichtfeld $A_2$(x,y,z⁻) vor der Ebene des zweiten Hologramms $h_2$(x,y) berechnet. Mit diesem Lichtfeld wird die komplexwertige Funktion des zweiten Hologramms $h_2$(x,y) gemäß Gleichung 5 multipliziert. Dadurch ergibt sich das Lichtfeld $A_2$(x,y,z⁺) hinter dem zweiten Hologramm $h_2$(x,y).

Diese Schritte werden fortgeführt, bis das Lichtfeld $A_i$(x,y,z⁻) vor der Ebene des zu berechnenden Hologramms $h_i$(x,y) berechnet ist.

Befindet sich vor dem i-ten Hologramm $h_i$(x,y) mit i=1 kein weiteres Hologramm h(x,y), wird das Lichtfeld $A_i$

(x,y,z') direkt aus dem Lichtfeld $A_0$ (x,y,z) des einfallenden Auslesestrahls berechnet.

Danach wird von der gewünschten Rekonstruktion rückwärts ("reverse egineering") das Lichtfeld $A_n(x,y,z^+)$ berechnet, das in Ausbreitungsrichtung hinter der Ebene des letzten Hologramms $h_n(x,y)$ des Schichtaufbaus vorhanden sein muss, damit die gewünschte Rekonstruktion entsteht. Nun wird das Lichtfeld $A_n(x,y,z^+)$ gemäß Gleichung 6 dividiert durch die komplexwertige Funktion des Hologramms $h_n(x,y)$. Die sich so ergebende Funktion ist das Lichtfeld $A_n(x,y,z^-)$, das vor dieser Ebene entstehen muss.

Vom Lichtfeld $A_n(x,y,z^-)$ ausgehend wird nun rückwärts das Lichtfeld $A_{n-1}(x,y,z^+)$ berechnet, das hinter der Ebene des vorletzten Hologramms $h_{n-1}(x,y)$ des Schichtaufbaus vorhanden sein muss. Erneut wird durch das Hologramm $h_{n-1}(x,y)$ dividiert, worauf $A_{n-1}(x,y,z^-)$ entsteht.

Diese Schritte werden nun fortgeführt, bis auch das Lichtfeld $A_i(x,y,z^+)$ hinter der Ebene des zu berechnenden Hologramms $h_i(x,y)$ berechnet ist.

Befindet sich hinter dem i-ten Hologramm $h_i(x,y)$ mit i=n kein weiteres Hologramm h(x,y), so wird das Lichtfeld $A_i(x,y,z^+)$ direkt aus dem Lichtfeld $A_R(x,y,z)$ der gewünschten Rekonstruktion berechnet.

Die Berechnung ist also nun von der Ebene der Rekonstruktion bis hinter die Ebene des zu berechnenden Hologramms $h_i(x,y)$ gelangt und es wurde berechnet, welches Lichtfeld dort entstehen muss, damit in der Ebene der Rekonstruktion das gewünschte Bild entsteht.

Damit ist einerseits das Lichtfeld $A_i(x,y,z^-)$ berechnet worden, das vor der Ebene des zu berechnenden Hologramms $H_i$ durch die vorherigen Hologramme $h_1$ bis $h_{i-1}$ und das Ausgangslichtfeld $A_0(x,y,z)$ entsteht. Andererseits kennt man das Lichtfeld $A_i(x,y,z^+)$, das hinter der Ebene des zu berechnenden Hologramms $h_i$ entstehen muss, damit in der Rekonstruktionsebene die gewünschte Rekonstruktion $A_R(x,y,z_R)$ entsteht.

Die exakte Berechnung des Hologramms $h_i(x,y)$ ergibt sich aus der Division der beiden Lichtfelder $A_i(x,y,z^+)$ und $A_i(x,y,z^-)$ gemäß:

$$(7) \qquad h_i(x,y) = \frac{A_i(x,y,z^+)}{A_i(x,y,z^-)}$$

Bei der Berechnung muss berücksichtigt werden, dass in den Fällen, in denen einer der diskreten Werte für $A_i(x,y,z^-)$ gleich Null ist, der Wert von $h_i(x,y)$ einen beliebigen Wert annimmt, um eine Division durch Null zu vermeiden.

Insgesamt kann man das Mehrschichthologramm auch als Transformationselement verstehen, das ein einfallendes Lichtfeld $A_{in}(x,y)=A_1(x,y,z^-)$ in ein ausfallendes Lichtfeld $A_{aus}(x,y)=A_n(x,y,z^+)$ umwandelt. Dabei besteht eine klare Beziehung zwischen dem Eingangslichtfeld und dem Ausgangslichtfeld, die als eine Serie von komplexen Multiplikationen des Lichtfeldes mit den einzelnen Hologrammen beschrieben werden kann.

Könnte man die berechnete Funktion, so wie sie exakt berechnet worden ist, in ein Medium schreiben, so wäre das Ergebnis, d.h. die Rekonstruktion, perfekt. Hierbei besteht allerdings die Schwierigkeit, ein geeignetes Schreibgerät und ein zugehöriges Medium zu finden, mit dem man Amplitude und Phase eines Lichtstrahls in hoher Auflösung und mit hoher Genauigkeit schreiben kann. Jedoch sind die Auflösung und die Genauigkeit begrenzt. Im Falle computergenerierter Einzelhologramme des Mehrschichthologramms kann man in einem bspw. quadratischen Raster mit Mikrometer-Auflösung ein binäres Punktemuster erzeugen, d.h. Punkte werden geschrieben oder nicht geschrieben.

Die berechnete Funktion des Hologramms $h_i$ ist aber wesentlich komplizierter. Für eine Umwandlung der komplizierten berechneten Funktion in eine mit dem Schreibgerät in das Speichermedium schreibbare Funktion kann man die mathematische Funktion $h_i(x,y)$ kodieren.

Für eine einfache Kodierung wird die berechnete Funktion $h_i(x,y)$ an den Rasterpunkten (x,y) abgegriffen und mit einem Schwellwert verglichen. Wenn die Funktion h(x,y) unter dem Schwellwert liegt, dann wird eine null geschrieben, ansonsten eine eins (einfache Binärisierung). Jedoch ist die vorliegende Erfindung nicht auf diese Art der Kodierung beschränkt, da aus dem Stand der Technik eine Vielzahl von Kodierungen bekannt ist. Dazu werden beispielsweise die Error-Diffusion-Kodierung und die Kodierung mit Hilfe eines iterativen Fouriertransformationsalgorithmus genannt.

Je größer der Fehler ist, der bei dieser Kodierung auftritt, desto größer ist der Fehler in der Rekonstruktion. Jedoch wird selbst mit binären Phasenhologrammen ein gutes Ergebnis erzielt.

Der zuvor beschriebene Fehler lässt sich aus dem berechneten in der Rekonstruktionsebene vorliegenden Lichtfeld $A_R'(x,y,z_R)$ und dem ursprünglich in die Berechnung eingegebenen Lichtfeld $A_R(x,y,z_R)$ ableiten.

Es gibt eine Vielzahl von nahezu optimalen Lösungen, d.h. die Rekonstruktion stimmt ungefähr mit dem gewünschten Ergebnis überein. Bei einem Mehrschichthologramm wird die Rekonstruktion umso perfekter, je besser die einzelnen Schichten aufeinander abgestimmt sind. Dies ist anfangs der Berechnung nicht der Fall, da n-1 Hologramme zufällig gewählt sind, und nur das i-te berechnet ist. Das i-te Hologramm muss somit die Zufälligkeiten der anderen Hologramme ausgleichen.

Um diesen Fehler zu mindern kann man nun ein beliebiges der n aus dem Berechnungsverfahren vorliegenden Hologramme $h_k$ wählen, z.B. $h_j$ mit $j \neq i$ Die bisher verwendete aktuelle Funktion $h_j$ wird verworfen und es wird das oben beschriebene Verfahren verwendet, um $h_j$ zu berechnen, die anderen Hologramme $h_k$, insbesondere das zuvor berechnete Hologramm $h_i$, bleiben unverändert. Der Gesamtaufbau wird damit näher an die ideale Lösung gebracht, da jetzt 2 Hologramme auf das Problem angepasst sind.

Nachfolgend werden weitere bisher nicht optimierte Hologramme ausgewählt, verworfen und neu berechnet, bis eine vorgegebene Fehlerbedingung erfüllt ist. Als Fehlerbedingung kann eingesetzt werden, dass der errechnete Fehlerwert unterhalb einer vorgegebenen Schwelle liegt oder dass die Differenz zwischen dem aktuellen Fehlerwert und dem im vorigen Iterationsschritt errechneten Fehlerwert unterhalb einer Schwelle liegt, der Fehler sich also nicht mehr wesentlich verbessern lässt.

Dieses Verfahren kann auch iterativ durchgeführt werden, indem bereits zuvor optimierte Hologramme ausgewählt, verworfen und neu berechnet werden. Somit werden einzelne Hologramme des Schichtaufbaus mehrfach neu berechnet, um den Fehler zu minimieren.

Bei dem zuvor beschriebenen Verfahren zum Optimieren der Hologramme des Mehrschichthologramms ist es bevorzugt, die Iteration nach dem Gerchberg-Saxton Algorithmus zu berechnen, bei dem die durch das beugende Element, also das Hologramm, hervorgerufenen Randbedingungen durch einen Kodierungsoperator dargestellt werden. Dadurch lassen sich gezielt Bereiche innerhalb der vom Hologramm eingenommenen Fläche auswählen, in denen das durch die Berechnung der kodierten Hologramme entstehende Rauschen verringert werden kann.

Des weiteren dient das wiederholende, ggf. iterative Berechnen einzelner Hologrammfunktionen $h_k(x,y)$ dazu, die zu speichernde Information nicht nur in einem Hologramm einzuschreiben, sondern auf mehrere, ggf. auf alle Hologramme des Mehrschichthologramms zu verteilen.

Nachfolgend wird das Multiplexing bei der Berechnung der Mehrschichthologramme beschrieben. Multiplexing bedeutet, dass das Mehrschichthologramm unter verschiedenen Auslesekonfigurationen verschiedene Rekonstruktionen zeigt. Diese Konfigurationen können Winkel des Auslesestrahls, Wellenlänge des Auslesestrahls, Phase des Auslesestrahls, Amplitudenverteilung des Auslesestrahls usw. sein (siehe oben).

Im Falle des Winkelmultiplexing besteht insbesondere die Möglichkeit, die Auslesestrahlen aus unterschiedlichen Richtung auf das Mehrschichthologramm auftreffen zu lassen. Das bedeutet, dass sich die Ausbreitungsrichtungen zweier Auslesestrahlen um mindestens $91°$ bis $269°$ unterscheiden, also entgegengesetzte Komponenten in z-Richtung aufweisen.

Für eine Berechnung der Multiplexeigenschaften des Mehrschichthologramms gibt es verschiedene Vorgehensweisen. Es handelt sich einerseits um eine komplexe Addition, um einen iterativen Algorithmus und um einen Zusammenbau der Hologrammfunktionen durch räumlich getrennte Abschnitte des vom Auslesestrahl durchleuchteten Bereiches des Mehrschichthologramms.

Zur Berechnung eines Hologramms mit Multiplexingeigenschaften mittels der komplexen Addition wird zunächst für jede Konfiguration einzeln wie oben vorgegangen. Es werden wieder n-1 Hologramme fest vorgegeben und das i-te Hologramm $h_i(x,y)$ wird für jede Konfiguration einzeln berechnet. Damit ergibt sich für die Konfiguration 1 die Funktion $h_i^1(x,y)$, für die Konfiguration 2 die Funktion $h_i^2(x,y)$, ..., und für die Konfiguration m die Funktion $h_i^m(x,y)$. Das i-te Hologramm mit der komplexen Funktion $h_i(x,y)$ wird dann berechnet als komplexe Summe aus allen einzelnen Funktionen gemäß

$$(8) \quad h_i(x,y) = \sum_{j=1}^{m} h_i^j(x,y) .$$

Das bedeutet, dass sämtliche Informationen der einzelnen Konfigurationen in der Hologrammfunktion $h_i(x,y)$ gleichberechtigt überlagert sind.

Zur Berechnung eines Hologramms mit Multiplexingeigenschaften mittels Iteration wird in einem ersten Schritt für eine erste Rekonstruktion mit dem Lichtfeld $A_R^1(x,y,z)$ das Verfahren iterativ durchlaufen, wie es oben beschrieben worden ist. Dadurch wird die Information der ersten Rekonstruktion auf mehrere oder alle Hologramme des Mehrschichthologramms übertragen.

Anschließend werden sämtliche Hologrammfunktionen $h_k(x,y)$ bis auf für das i-te Hologramm beibehalten und das iterative Verfahren für eine zweite Rekonstruktion mit dem Lichtfeld $A_R^2(x,y,z)$ durchgeführt. Dabei wird der für die erste Rekonstruktion eingeschriebenen Information die der zweiten Rekonstruktion überlagert.

Diese Vorgehensweise wird solange wiederholt, bis alle m Rekonstruktionen im Mehrschichthologramm eingerechnet worden sind.

Bei der iterativen Berechnung muss berücksichtigt werden, dass bei einem Berechnen einer weiteren Rekonstruktion mit einem teilweisen Verlust der Informationen der vorhergehenden Rekonstruktionen gerechnet werden muss. Daher eignet sich das iterative Verfahren für die Berechnung eines Multiplexing bei einem Mehrschichthologramms nur für wenige verschiedene Rekonstruktionen.

Zur Berechnung eines Hologramms mit Multiplexingeigenschaften durch Anordnung von räumlich getrennten Abschnitten des vom Hologramm eingenommenen Raumbereiches des Mehrschichthologramms wird davon ausgegangen, dass die Information der Rekonstruktion gleichmäßig über den Raumbereich des Hologramms verteilt angeordnet ist. Dazu wird die Rekonstruktion bevorzugt so gewählt, dass diese im Fourierraum des Hologramms liegt und aus einer Amplitude mit einer zufallsverteilten Phase besteht. Dadurch kann anstelle des gesamten Hologramms $h_i(x, y)$ auch nur ein Teil des Hologramms verwendet werden, um die Information zu rekonstruieren.

Neben der zufallsverteilten Phase eignen sich auch andere Phasenverteilungen, die Musterabhängig optimiert werden können. Hier sind beispielsweise "Linsenphasen" zu nennen die sich besonders für Hologramme eignen, bei denen in der Rekonstruktion die Lichtverteilung in einem kleinen Bereich konzentriert ist.

Werden nun für die m verschiedenen Auslesekonfigurationen jeweils die Hologrammfunktionen $h_i^1(x,y) \dots h_i^m(x,y)$ berechnet, so kann die gesamte Hologrammfunktion $h_i(x,y)$ durch ein Zusammensetzen aus einzelnen räumlich getrennten Bereichen der einzelnen Hologrammfunktionen $h_i^j(x,y)$ aufgebaut werden. Dieses ist in Fig. 3 für 3 verschiedene Auslesekonfigurationen dargestellt.

Für alle drei zuvor beschriebenen Berechnungsarten der Hologrammfunktion $h_i(x,y)$ für jeweils mehr als eine Auslesekonfiguration gilt folgendes.

Wie oben beschrieben wird die Hologrammfunktion $h_i(x,y)$ kodiert, um zu einer schreibfähigen Hologrammfunktion zu gelangen. Dadurch ergibt sich beim Multiplexing neben dem oben beschriebenen Kodierungsfehler noch ein zusätzlicher Fehler dadurch, dass das Hologramm $h_i(x,y)$ mehr Information tragen muss. Beim Multiplexing kann daher ebenfalls die oben beschriebene Optimierung angewendet werden.

Im folgenden wird beschrieben, wie der minimale Abstand zwischen jeweils zwei Hologrammen des Mehrschichthologramms berechnet werden kann. Denn es kommt beim Aufbau des Mehrschichthologramms darauf an, dass das Profil der Phasenverschiebung durch ein erstes Hologramm nicht auf ein nachfolgendes Hologramm übertragen und dort reproduziert wird, so wie zwei Phasenverschiebungen sich in einem einzigen Hologramm überlagern.

Weiterhin kann aus dem diskreten Abstand der einzelnen Punkte des computergenerierten Hologramms in der X-Y Ebene ein optimaler Minimalabstand berechnet werden. Des weiteren kann durch die Wahl der vorgegebenen Rekonstruktionswinkel die Toleranz gegenüber Abweichungen in der Z Lage der verschiedenen Lagen eingestellt werden.

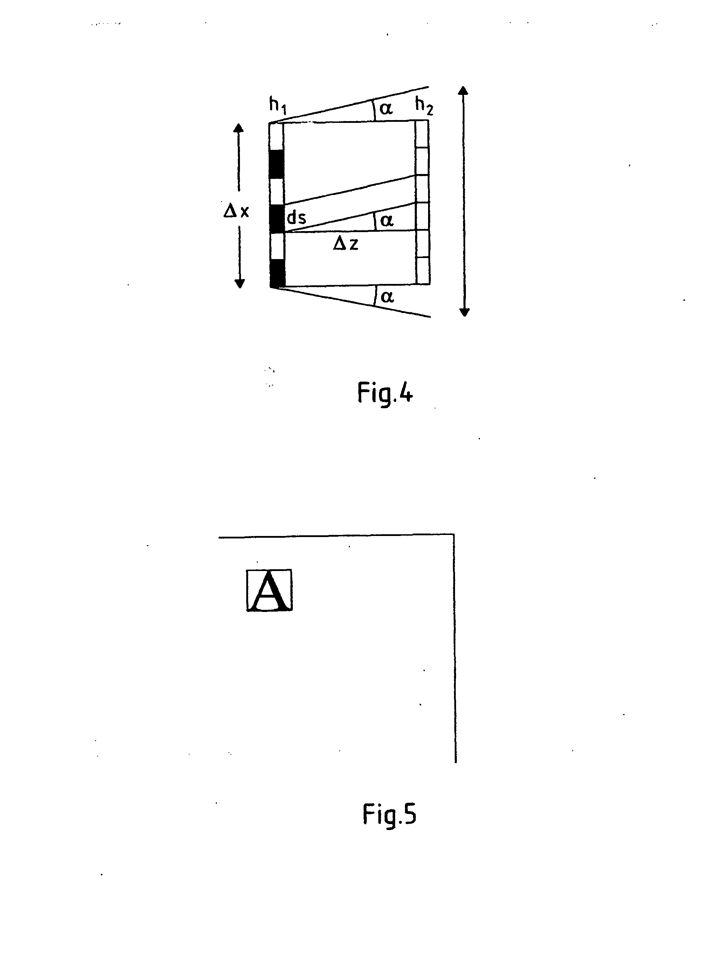

Computergenerierte Hologramme weisen ein Raster auf, dem eine Gitterkonstante zugeordnet werden kann, die dem Zweifachen der geometrischen Abmessung (Dimension) ds eines Pixels entspricht, siehe dazu Fig. 4. Als Bedingung für den minimalen Abstand zwischen zwei Hologrammen wird angenommen, dass die Beugung in erster Ordnung, die von einem Pixel des ersten Hologramms $h_1$ ausgeht, auf ein benachbartes Pixel des zweiten bzw. nächsten Hologramms $h_2$ trifft. Somit wird gewährleistet, dass das erste Hologramm nicht auf dem zweiten Hologramm reproduziert wird. Daraus ergibt sich für den minimalen Abstand $\Delta z_{min}$ die folgende Bedingung:

$$(9) \qquad \Delta z_{min} = \frac{ds}{\tan\alpha} \;,$$

wobei $\alpha$ der Winkel der ersten Beugungsordnung ist und von der Wellenlänge abhängig ist.

Andererseits kann der maximale Abstand $\Delta z_{max}$ zwischen zwei verschiedenen Hologrammen $h_k$ des Mehrschichthologramms durch die Bedingung:

$$(10) \qquad \Delta z_{max} = \frac{\Delta x}{2\tan\alpha}$$

bestimmt werden, wobei $\Delta x$ die geometrische Abmessung eines Hologrammelementes ist und wobei der Winkel $\alpha$ der Winkel der ersten Beugungsordnung ist und von der Wellenlänge abhängig ist. Diese Bedingung gewährleistet, dass zumindest die Hälfte der Lichtenergie des Auslesestrahls, die auf eine erste Schicht auftrifft, auch die zweite Schicht erreicht.

Die zuvor beschriebenen Varianten des Verfahrens zum Berechnen von Mehrschichthologrammen lassen sich in verschiedenen Anwendungen nutzen. Dabei gibt es zahlreiche Kombinationen von Informationseinheiten innerhalb der einzelnen Hologramme des Mehrschichthologramms.

Bei einer bevorzugten Ausgestaltung der Mehrschichthologramme können aus den einzelnen Hologrammen keine auslesbaren Informationen rekonstruiert werden. Das bedeutet, dass die einzelnen Hologramme des Schichtaufbaus nicht rekonstruieren, sondern nur in ihrer Gesamtheit.

Bei einer weiteren Ausgestaltung können aus mindestens einem einzelnen der vorhandenen Hologramme auslesbare Informationen rekonstruiert werden, wobei aus den verbleibenden Hologrammen nur in Kombination aller Hologramme auslesbare Informationen rekonstruiert werden können. Somit können die einzelnen für sich auslesbaren Hologramme separat für eine Rekonstruktion genutzt werden, während sich zusätzlich in der Kombination mit den weiteren Hologrammen des Schichtaufbaus weitere Informationen rekonstruieren lassen.

Dazu kann beispielsweise das mindestens eine einzelne rekonstruierbare Hologramm und die übrigen Hologramme des Mehrschichthologramms in verschiedenen Speichermedien eingeschrieben werden.

Mit computerberechneten Mehrschichthologrammen können auch XOR-Verschlüsselungen durchgeführt werden, indem n-1 Hologrammfunktionen $h_k$ als jeweils zufällig gewähltes Phasenmuster vorgegeben werden und bei dem das i-te Hologramm als n-1 fach XOR-verschlüsselte Hologrammfunktion $h_i$ berechnet wird. Dieser Ausgestaltung des Verfahrens liegt die Erkenntnis zugrunde, dass bspw. eine binäre Informationen enthaltende Folge I durch eine zufällig gewählte binäre Folge Z zu einer verschlüsselten Folge XOR verschlüsselt werden kann. Dieses soll an folgendem Beispiel deutlich gemacht werden:

```
I:     0 1 1 0 0 1 0        Information

Z:     0 1 0 1 1 0 1        Zufallsfolge

XOR:   0 0 1 1 1 1 1        XOR-verschlüsselte Folge
```

Die Entschlüsselung erfolgt dann in umgekehrter Richtung:

| XOR | 0 0 1 1 1 1 1 |
|-----|---------------|
| Z   | 0 1 0 1 1 0 1 |
| I   | 0 1 1 0 0 1 0 |

Das zuvor aufgezeigte Beispiel entspricht einer 2-Bit Verschlüsselung. Daneben sind auch 8-bit XOR-Verschlüsselungen bekannt.

Wird nun bei einem Zweischichthologramm das Phasenmuster der Hologrammfunktion $h_2$ zufällig in 256 Einheiten im Intervall 0 bis $2\pi$ (8-bit) gewählt und die Hologrammfunktion $h_1$ berechnet, dann ist die Information der vorgegebenen Rekonstruktion 8-bit XOR-verschlüsselt im Zweischichthologramm gespeichert.

In der Verallgemeinerung werden n-1 Hologrammfunktionen $h_k$ als zufälliges Phasenmuster gewählt, so dass die berechnete Hologrammfunktion $h_i$ n-1-fach XOR-verschlüsselt ist.

Im folgenden werden Beispiele verschiedener Anwendung anhand von Zweischicht-Hologrammen erläutert. Zweischicht-Hologramme sind einfach im Aufbau und somit auch einfach in der Berechnung. Dennoch zeigen die Zweischicht-Hologramme bereits die zuvor beschriebenen Eigenschaften der Mehrschichthologramme, sind also deutlich von einem einzelnen computergenerierten Hologramm verschieden.

Die Einzelhologramme sind gleich groß und umfassen bspw. 512 x 512 oder 1024 x 1024 Punkte im Abstand von ds=1µm sowohl in x- als auch y-Richtung. Die beiden Hologramme sind im Abstand von $\Delta z$=58µm, was im Einklang mit den Gleichungen 9 und 10 steht. Das Zweischicht-Hologramm wird mit einer ebenen Welle eines Laserstrahls mit einer Wellenlänge von 632,8 nm beleuchtet und die Rekonstruktion wird im Fourierraum mit Hilfe einer Linse in der Rekonstruktionsebene abgebildet.

Als Lichtfeld in der Rekonstruktionsebene wird die Abbildung eines Buchstabens "A" gewählt, wie in Fig. 5 dargestellt ist. Innerhalb des Signalfensters, das außerhalb der Mitte der Rekonstruktionsebene angeordnet ist, wird die Phase willkürlich festgelegt. Anschließend wurde das zweite Hologramm mit einem zufälligen Intensitäts- und Phasenmuster vorgegeben und das erste Hologramm des Schichtaufbaus berechnet.

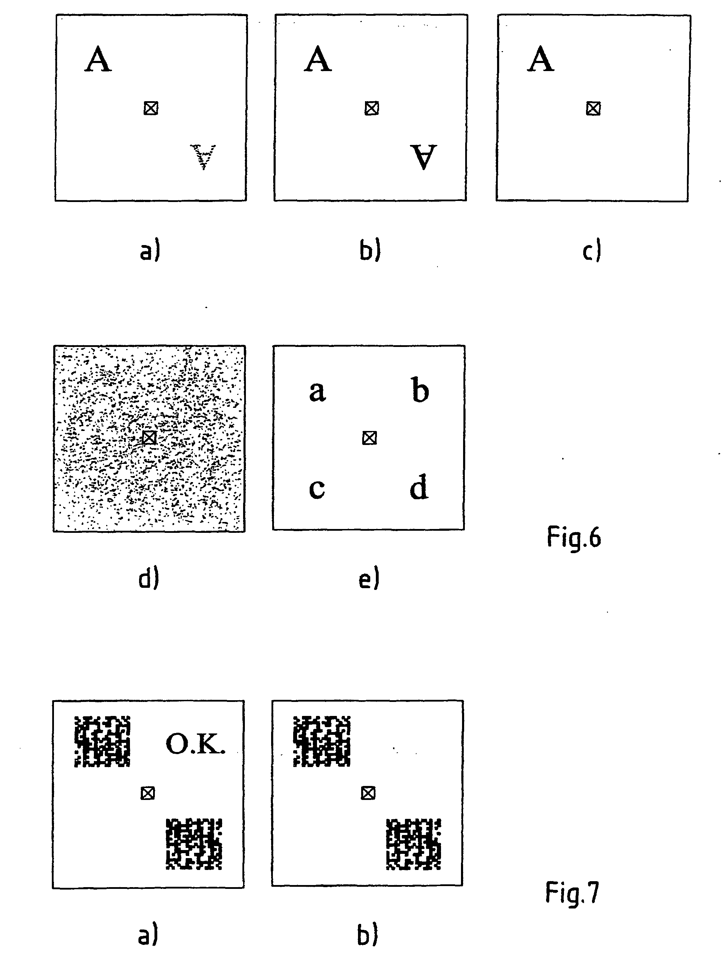

Fig. 6a zeigt die Rekonstruktion eines Zweischichthologramms, bei dem im ersten Hologramm die in Fig. 6b dargestellte Information gespeichert ist. Die Rekonstruktion nur des ersten Hologramms ergibt das Abbild des Buchstabens "A" in der Ordnung +1 und -1, also punktsymmetrisch zum Mittelpunkt der Abbildung. Das Zweischichthologramm ist für die Abbildung gemäß Fig. 5, also des Buchstabens "A" in der Ordnung +1, berechnet worden. Die in Fig. 6a gezeigte Rekonstruktion zeigt eine Verstärkung des Abbildes des Buchstabens "A" in der Ordnung +1, während in der Ordnung -1 ein schwächeres Abbild als in Fig. 6b erscheint. Wenn also ein erstes Hologramm eines Zweischichthologramms eine allein für sich rekonstruierbare Information trägt, dann erscheint in der Rekonstruktion des Zweischichthologramms neben der eigentlich gewünschten Rekonstruktion auch das sich aus dem Einzelhologramm ergebende Abbild.

Fig. 6c zeigt die Rekonstruktion des Lichtfeldes in der Rekonstruktionsebene, in der nur das Abbild des Buchstabens "A" erscheint, dagegen aber kein weiteres Abbild punktsymmetrisch zur Mitte der Rekonstruktionsebene, wie es bei einfachen computergenerierten Hologrammen und bei dem zuvor beschriebenen Zweischichthologramm der Fall ist. Dieses entspricht dem Blazing-Effekt, wie er oben beschrieben worden ist. In Fig. 6d ist die Rekonstruktion des ersten Hologramms gezeigt. Darin ist keine direkt erkennbare Information enthalten. Mit anderen Worten ist die Information des Rekonstruktionsbildes verschlüsselt in beiden Hologrammen verteilt angeordnet. Fig. 6e zeigt die Ausnutzung des Blazing-Effektes, indem die gesamte zur Verfügung stehende Fläche der Rekonstruktionsebene für die Rekonstruktion unterschiedlicher Informationen genutzt werden kann.

Die zuvor beschriebenen Eigenschaften können mathematisch daraus abgeleitet werden, dass sich die Rekonstruktion aus der Summe der Einzelrekonstruktionen $R(h_i)$ und der Summe aller Mischungsterme $R(h_i*h_j)$ ergibt. Ist in den Rekonstruktionen der Einzelhologramme keine separate Information gespeichert, so ergibt sich auch keine eine separate Information tragende Rekonstruktion.

Die Fig. 7a und 7b zeigen eine Anwendung eines Dreischichthologramms. Zwei der Schichten sind für die Rekonstruktion eines Datenbitmusters berechnet worden, während eine dritte Schicht mit den ersten beiden Schichten zusammen für die Darstellung eines "O.K." berechnet worden ist. Sind nur die ersten beiden Hologramme vorhanden, dann ergibt die Rekonstruktion das Datenbitmuster gemäß Fig. 7b, während sich zusammen mit dem dritten Hologramm die in Fig. 7a dargestellte Rekonstruktion der Kombination aus dem Datenbitmuster und dem "O.K." ergibt. Ist die dritte Schicht in einem separaten Speichermedium gespeichert, so kann dieses als Schlüssel zur Überprüfung der Authentizität der ersten beiden Schichten verwendet werden.

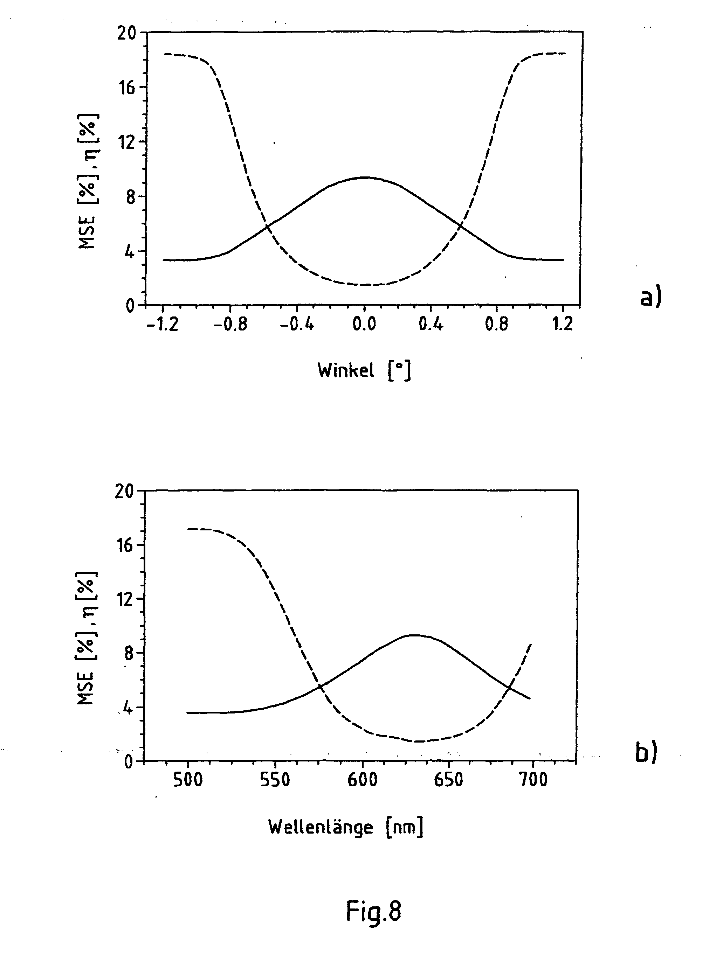

Zweischicht-Hologramme zeigen auch eine ausgeprägte Winkelselektivität. Die Rekonstruktion ist unter einem Einfallswinkel des Auslesestrahls von ca. 0,5° noch sichtbar, während bei einem Einfallswinkel von ca. 1° die Rekonstruktion nicht mehr sichtbar ist, siehe Fig. 8a. Denn die Beugungseffizient $\eta$ sinkt von einem Wert von 9,5% bei 0° auf die Hälfte bei 0,7° und kommt bei ca. 1° unter die Rauschgrenze von 3,3%. Im gleichen Intervall steigt die Fehlerrate (MSE, mean square error) von 1,5% auf über 18%.

Fig. 8b zeigt die Wellenlängenselektivität eines für eine Wellenlänge von 632,8 nm berechneten Zweischicht-Hologramms, das bei einer Wellenlänge von ca. 520 nm nicht mehr auslesbar ist, da sich das Signal nicht vom Rauschen unterscheidet.

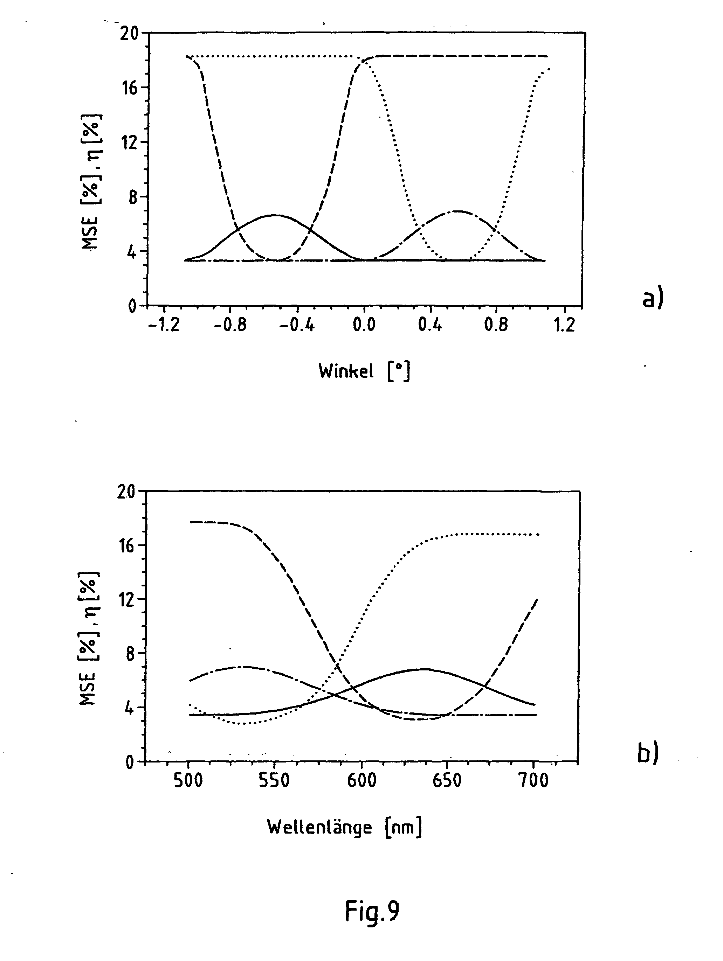

Fig. 9a und 9b zeigen diese Effekte in einer Anwendung des Winkel- und Wellenlängenmultiplexing. Zwei verschiedene Informationen werden zum einen unter verschiedenen Winkeln und zum anderen mit verschiedenen Wellenlängen in ein gleiches Zwei-Schicht-Hologramm eingerechnet. Die durchgezogene und die gestrichelte Linie für 0° einerseits und die punktierte und strichpunktierte Linie für 2° andererseits gemäß Fig. 9a zeigen, dass beide Informationen nur unter vorgegebenen Einfallswinkelbereichen ausgelesen werden können, die sich nicht überlappen. Somit können beide Informationen nur ausgelesen werden, wenn die andere Information nicht sichtbar ist. Fig. 8b zeigt denselben Effekt in Bezug auf das Wellenlängenmultiplexing. Die eine Information ist nur in einem Wellenlängenbereich zu erkennen, in dem die andere Information nicht zu erkennen ist und umgekehrt.

Bei einer weiteren Ausführungsform wird eine erste, vorzugsweise außen angeordnete Schicht ein Mikroklartext eingeschrieben, der direkt lesbare Informationen, beispielsweise einen Namen oder ein Logo enthält. Dadurch hat das Mehrschichthologramm ein identifizierbares Äußeres, das jedoch mit der eingeschriebenen holographischen Information nicht korreliert ist. Denn auch wenn die Information des Klartextes direkt lesbar ist, wird die darin enthaltene Information nicht holographisch verwertet. Die Klartext enthaltende erste Schicht wird als beliebig gewähltes Bitmuster in das Berechnungsverfahren einbezogen.
Eine weitere Ausführungsform der Mehrschichthologramme besteht darin, ein teilweise oder ganz reflektierende Schicht einzubeziehen. Dazu sind verschiedene Ausgestaltungen möglich, die im folgenden beschrieben werden.

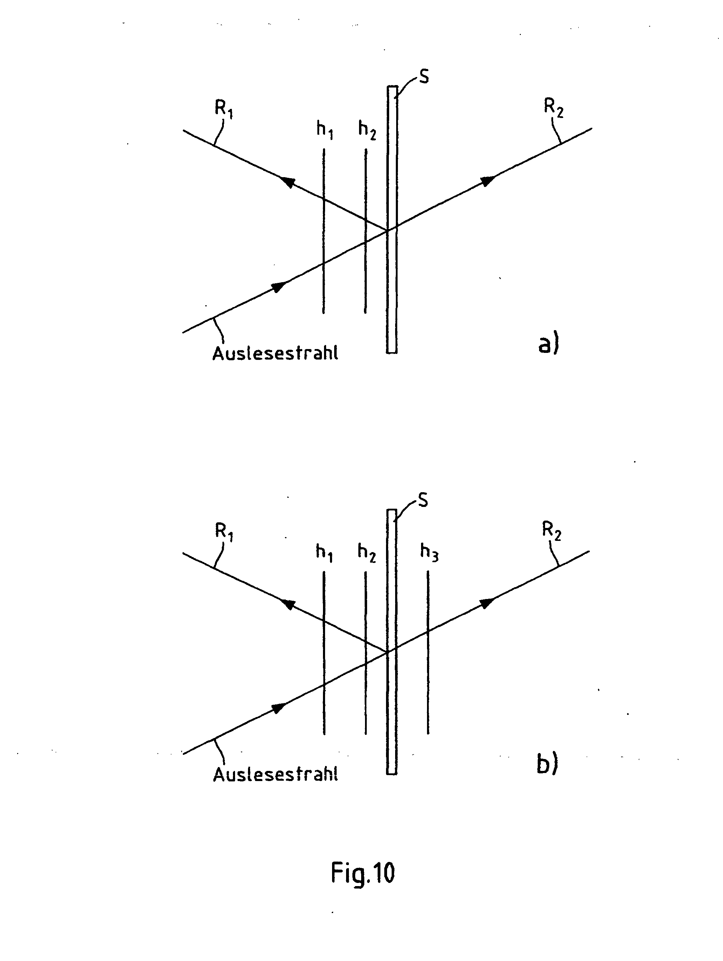

Fig. 10a zeigt ein Mehrschichthologramm, das nach dem oben beschriebenen Verfahren berechnet wird, bei dem eine teilweise reflektierende Schicht im Schichtaufbau vorgegeben wird und bei dem unter Berücksichtigung des zumindest teilweise reflektierten Auslesestrahls die Hologrammfunktion $h_i$ berechnet wird. Der in Fig. 10a dargestellte Schichtaufbau weist zwei Hologramme $h_1$ und $h_2$ und eine in Ausbreitungsrichtung des Auslesestrahls hinter dem Zweischichthologramm angeordnete halb reflektierende Schicht S auf. Der Auslesestrahl fällt unter einem vorgegebenen Winkel auf die Oberfläche des Mehrschichthologramms auf, so dass der reflektierte Anteil erneut die beiden Hologrammschichten $h_1$ und $h_2$, aber in umgekehrter Ausbreitungsrichtung durchläuft und zur Rekonstruktion $R_1$ führt, während das sich nach dem Durchtritt durch die Hologrammschichten $h_1$ und $h_2$ ergebende Lichtfeld durch die Schicht S hindurchtritt und zur Rekonstruktion $R_2$ führt.

Somit werden vom reflektierten Anteil beide Hologrammschichten $h_1$ und $h_2$ zweifach durchlaufen. Dieses kann mit den oben beschriebenen Methoden der Berechnung von Multiplexingeigenschaften berechnet werden. Mit anderen Worten entspricht die transmittierende Anwendung einem Zweischichthologramm, während die reflektierende Anwendung ein Vierschichthologramm darstellt.

Fig. 10b zeigt eine weitere Ausführung, bei der die Schicht S zwischen den beiden Hologrammschichten $h_2$ und $h_3$ angeordnet ist, so dass der Auslesestrahl zunächst die Hologrammschichten $h_1$ und $h_2$ durchläuft und dann auf die Schicht S trifft. Der transmittierte Anteil des Auslesestrahls durchläuft dann noch die Hologrammschicht $h_3$ und

führt zur Rekonstruktion $R_2$, während wie beim Ausführungsbeispiel gemäß Fig. 10a der reflektierte Strahlanteil die beiden Hologrammschichten $h_1$ und $h_2$ erneut, aber in umgekehrter Ausbreitungsrichtung durchläuft und zur Rekonstruktion $R_1$ führt.

Darüber hinaus ist es möglich, dass eine der Hologrammschichten selber zumindest teilweise reflektierend ausgebildet ist und die optischen Veränderungen dem Auslesestrahl sowohl in Transmission als auch in Reflektion aufprägen kann. Dieses kann beispielsweise durch die Ausbildung einer Oberflächenstruktur erreicht werden, in der die optischen Informationen eingebracht sind. Ist also beispielsweise eine von zwei Hologrammschichten reflektierend ausgebildet, handelt es sich um ein Dreischichthologramm in Reflektion.

Eine weitere Ausgestaltung des bisher beschriebenen Verfahrens besteht darin, eine veränderbare Hologrammschicht vorzugeben, um daraus ein Mehrschichthologramm zu berechnen, dessen Rekonstruktion durch einen Auslesestrahl extern modifiziert werden kann. Eine solche veränderbare Schicht kann beispielsweise durch ein LCD-Element verwirklicht werden, wie weiter unten beschrieben wird. Dazu werden für eine ausgewählte Hologrammschicht mit k=j mindestens zwei verschiedene Hologrammfunktionen $h_j{}^1$ und $h_j{}^2$ vorgegeben, wobei die Berechnung der i-ten Hologrammfunktion für die mindestens zwei verschiedenen Hologrammfunktionen $h_j{}^1$ und $h_j{}^2$ separat berechnet und anschließend überlagert werden.

Bisher wurde das Verfahren zum Berechnen eines Mehrschichthologramms beschrieben. Im folgenden sollen Ausgestaltungen des erfindungsgemäßen Herstellungsverfahrens angegeben werden.

Beim Verfahren zum Herstellen eines Mehrschichthologramms aus mindestens zwei computergenerierten Hologrammen werden die mindestens zwei Hologrammschichten berechnet, wobei insbesondere eines der zuvor beschriebenen Verfahren eingesetzt worden sein kann. Es kommt jedoch nicht darauf an, wie das Mehrschichthologramm erzeugt oder berechnet worden ist. Es ist lediglich erforderlich, die Informationen zu den einzelnen Hologrammschichten zu kennen. Die Informationen der mindestens zwei Hologramme werden dann jeweils in eine optisch veränderbare Schicht eines Speichermediums eingeschrieben, wobei die mindestens zwei Schichten den Schichtaufbau des Mehrschichthologramms bilden.

Bei einer Ausgestaltung dieses Verfahrens werden die Hologramme in mindestens zwei räumlich verschiedene Bereiche eines Speichermediums eingeschrieben. Daher liegt das Speichermedium bereits vor dem Einschreiben der Informationen als eine Einheit vor. Eine relative Justierung der Hologrammschichten zueinander muss daher beim Einschreibvorgang berücksichtigt werden.

Daneben ist es möglich, die Hologramme in mindestens zwei verschiedene Speichermedien einzuschreiben, die anschließend erst zu einer Gesamtheit zusammengefügt werden. Hierbei können die einzelnen Hologrammschichten erzeugt werden, ohne eine Justierung zueinander bereits während des Schreibens einhalten zu müssen.

Eine weitere Ausgestaltung des Herstellungsverfahrens besteht darin, dass jeweils mindestens eine Hologrammschicht in eine Polymerfolie als Speichermedium oder Speicherschicht eingeschrieben wird. Insbesondere bidirektional vertreckte Polymerfolien eignen sich für ein Einschreiben von computergenerierten Hologrammen, so dass diese sich auch für das Herstellen von Mehrschichthologrammen eignen.

Eine Möglichkeit besteht nun darin, dass jede von mindestens zwei Polymerfolien zunächst einzeln mit mindestens einer Hologrammschicht beschrieben wird und bei dem anschließend die mindestens zwei Polymerfolien zu einem Schichtaufbau zusammengefügt, insbesondere verklebt werden. Eine andere Möglichkeit besteht darin, dass zunächst mindestens zwei Polymerfolien zu einem Schichtaufbau zusammengefügt, insbesondere verklebt werden und dass anschließend die mindestens zwei zusammengefügten Polymerfolien schichtweise beschrieben werden. Diese beiden Möglichkeiten sind jeweils mit den oben angegebenen Vorteilen verbunden.

Darüber hinaus kann mindestens eine Schicht mit einer sichtbaren Klartextinformation eingeschrieben werden. Dadurch wird dem Mehrschichthologramm zusätzlich zur eigentlichen nicht direkt lesbaren Information auch eine optisch direkt lesbare Information eines Schriftzuges oder eines Logos aufgeprägt.

Des weiteren kann eine zumindest teilweise reflektierende Schicht eingefügt werden, wodurch sich die oben beschriebenen Eigenschaften des so ausgestalteten Mehrschichthologramms ergeben.

Schließlich kann beim Herstellen des Mehrschichtaufbaus mindestens eine Schicht mit zeitlich veränderbaren optischen Eigenschaften eingefügt wird, wobei vorzugsweise eine LCD-Schicht verwendet wird.

Im folgenden wird ein Beispiel einer Herstellung eines Zweischicht-Hologramms beschrieben. Als Aufzeichnungsmedium wird ein Stapel von zwei Polymerfilmen verwendet. Das Aufzeichnungsmedium wird Punkt für Punkt wie bei einem computergenerierten Hologramm mit einem fokussierten Laserstrahl beschrieben. Dabei wird ein Laserstrahl mit einer Divergenz von ca. 17° gewählt, so dass das Beschreiben in einer zweiten Ebene nicht die eingeschriebene Information in einer ersten Ebene beeinträchtigt. Denn durch die starke Divergenz ist der Bereich des Fokus so kurz, dass in einer Schicht die Leistungsdichte für ein Einschreiben von Informationen groß genug ist, während in der benachbarten Schicht die Leistungsdichte nicht ausreicht, um das Material des Aufzeichnungsmediums zu verändern.

Für ein Herstellen des Mehrschichthologramms können neben der zuvor erläuterten Laserlithographie auch andere bekannte Verfahren wie das direkte Drucken mit Photoverkleinerung oder auch Elektronenstrahllithographie verwendet werden.

Im folgenden wird das erfindungsgemäße Verfahren zum Auslesen eines Mehrschichthologramms beschrieben. Dazu wird ein Mehrschichthologramm verwendet, das vorzugsweise durch ein zuvor beschriebenes Verfahren berechnet und hergestellt worden ist. Es kommt jedoch nicht auf die konkrete Art der Berechnung und Herstellung an, es müssen lediglich die Randbedingungen der Herstellung bekannt sein, um das Mehrschichthologramm auslesen zu können. Zum Auslesen wird ein Speichermedium mit einem computergenerierten Mehrschichthologramm in einem Strahlengang eines Auslesestrahls angeordnet, wobei die bei der Berechnung des Mehrschichthologramms vorgegebenen Randbedingungen des Auslesestrahls selbst und zwischen dem Auslesestrahl und dem Speichermedium eingestellt werden und wobei in der Rekonstruktionsebene ein optisches Aufnahmemittel angeordnet wird. Dieses ermöglicht ein Erfassen und Auswerten des in der Rekonstruktionsebene entstehenden Abbildes.

Bei einer Ausgestaltung des Ausleseverfahrens sind die Mehrzahl von Hologrammen des Mehrschichthologramms in mindestens zwei verschiedenen Speichermedien angeordnet und die Speichermedien werden entsprechend der in der Berechnung der Hologramme vorgegebenen Randbedingungen zueinander positioniert. Positionierung bedeutet dabei die Einstellung der räumlichen Anordnung zueinander, also des Abstands, der Winkelstellung und der Ausrichtung zwischen den Speichermedien.

In bevorzugter Weise weist mindestens eine der Schichten des Mehrschichthologramms zeitlich veränderbare Amplituden und/oder Phaseninformationen auf, die extern, beispielsweise elektronisch gesteuert werden können. Dieses kann insbesondere mit Hilfe eines elektrooptischen Elementes, insbesondere eines LCD-Elementes, geschehen, das variable Amplituden- und Phaseninformationen der mindestens einen Schicht in Abhängigkeit eines Steuersignals erzeugt. Somit können mit einem Aufbau und einer Einstellung des Auslesestrahls durch elektronische Steuerung des elektrooptischen Elementes die Rekonstruktion zwischen zwei oder mehreren Ausführung umgeschaltet werden.

Im folgenden wird ein erfindungsgemäßes Speichermedium für ein computergeneriertes Mehrschichthologramm mit mindestens zwei Hologrammen beschrieben, das insbesondere mit Hilfe eines zuvor beschriebenen Verfahrens zum Herstellen eines Mehrschichthologramms hergestellt ist. Das Speichermedium weist mindestens eine optisch veränderbare Materialschicht auf, wobei in der mindestens einen Schicht die mindestens zwei Hologramme des Mehrschichthologramms eingeschrieben sind.

In bevorzugter Weise sind mindestens zwei separate Materialschichten vorgesehen, wobei die separaten Materialschichten jeweils mindestens eine Hologrammschicht des Mehrschichthologramms aufweisen. Diese Ausführung kann vor allem für eine Verschlüsselung mit einem separaten Schlüssel verwendet werden, wenn eines der separaten Speichermedien als Schlüssel für die anderen betrachtet wird.

Ebenso kann eine Mehrzahl von miteinander verbundenen Schichten aus einem optisch veränderbaren Material vorgesehen sein. Ein solcher Schichtaufbau kann insbesondere aus Polymerfolien bestehen, die miteinander verbunden, insbesondere verklebt sind.

Wie oben beschrieben worden ist, lassen sich Bedingungen für den Abstand zwischen jeweils zwei verschiedenen Hologrammschichten berechnen. Daraus ergibt sich, dass der minimale Abstand von jeweils zwei Hologrammen die Bedingung

$$\Delta z_{min} = \frac{ds}{\tan\alpha}$$

erfüllt, wobei ds die geometrische Abmessung eines Pixels des computergenerierten Hologramms ist und wobei der Winkel $\alpha$ der Winkel der ersten Beugungsordnung ist und von der Wellenlänge abhängig ist.

Ebenso ergibt sich, dass der maximale Abstand $\Delta z_{max}$ zwischen zwei Hologrammen die Bedingung:

$$\Delta z_{max} = \frac{\Delta x}{2\tan\alpha}$$

erfüllt, wobei $\Delta x$ die geometrische Abmessung eines Hologrammelementes ist und wobei der Winkel $\alpha$ der Winkel der ersten Beugungsordnung ist und von der Wellenlänge abhängig ist.

In bevorzugter Weise enthält mindestens eine Schicht eine sichtbare Klartextinformation, so dass das Äußere des Mehrschichthologramms ein direkt lesbare Information trägt, die nicht mit dem holographischen Inhalt des Mehrschichthologramm korreliert zu sein braucht.

Weiterhin vorzugsweise ist mindestens eine Schicht zum Erzeugen von zeitlich veränderbaren Amplitudenmustern und/oder Phasenmustern, insbesondere eine optoelektronische Schicht vorgesehen. Dadurch kann zwischen unterschiedlichen Rekonstruktionen bei ansonsten gleichen Auslesebedingungen umgeschaltet werden. Beispielsweise kann für ein solches Element ein LCD-Element verwendet werden, das eine ausreichend kleine Pixelauflösung gewährleisten kann.

**Patentansprüche**

1. Verfahren zum Berechnen eines computergenerierten Mehrschichtholgramms mit n Hologrammen, wobei n eine ganze Zahl größer gleich 2 ist,

   - in dem das Lichtfeld $A_o$ eines Auslesestrahls als H mathematische Funktion vorgegeben wird,
   - in dem das Lichtfeld $A_R$ in der Rekonstruktionsebene vorgegeben wird,
   - in dem das i-te Hologramm $h_i$ durch ein Verfochren berechnet mind,
   - bei dem die mathematischen Funktionen der n-1 Hologramme $h_k$ vorgegeben werden, wobei k ungleich i ist und k und i Werte zwischen 1 und n annehmen können,
   - bei dem das Lichtfeld $A_i^-$ in Strahlrichtung vor dem i-ten Hologramm $h_i$

     - für i>1 aus der Verknüpfung des Lichtfeldes $A_o$ des Auslesestrahls mit allen Hologrammfunktionen $h_k$, mit k<i, der in Strahlrichtung vor dem i-ten Hologramm angeordneten Hologramme $h_k$ und
     - für i=1 aus dem Lichtfeld $A_o$ berechnet wird,

   - bei dem das Lichtfeld $A_i^*$ in Strahlrichtung hinter dem i-ten Hologramm $h_i$

     - für i<n aus der Verknüpfung des Lichtfeldes $A_R$ in der Rekonstruktionsebene mit allen Hologrammfunktionen $h_k$, mit k>i, der in Strahlrichtung hinter dem i-ten Hologramm $h_i$ angeordneten Hologramme $h_k$ und
     - für i=n aus dem Lichtfeld $A_R$ zurückberechnet wird, und

   - bei dem die Hologrammfunktion $h_i$ als Quotient aus den Lichtfeldern $A_i^-/A_i^-$ berechnet wird.

2. Verfahren nach Anspruch 1,
   bei dem punktweise der Wert für $h_i$ einen beliebigen Wert zugewiesen bekommt, wenn der Wert von $A_i^-$ in diesem Rasterpunkt gleich null ist.

3. Verfahren nach Anspruch 1 oder 2,
   bei dem die Hologrammfunktion $h_i$ des zu berechnenden i-ten Hologramms $h_i$ kodiert, insbesondere quantisiert, vorzugsweise binär quantisiert berechnet wird.

4. Verfahren nach Anspruch 3,

   - bei dem die berechnete Funktion $h_i$ an den Rasterpunkten abgegriffen und mit einem Schwellwert verglichen wird und
   - bei dem dann, wenn die Funktion $h_i$ unter dem Schwellwert liegt, der kodierte Wert $h_i'$ gleich null und ansonsten gleich eins gesetzt wird.

5. Verfahren nach einem der Ansprüche 1 bis 4,

   - bei dem sämtliche Hologrammfunktionen $h_k$ bis auf für k=j≠i beibehalten und die Lichtfelder $A_j^+$ und $A_j^-$ wie in Anspruch 1 neu berechnet werden und
   - bei dem die Hologrammfunktion $h_j$ wie in Anspruch 1 neu berechnet wird.

6. Verfahren nach Anspruch 5,
   bei dem auch bereits einmal berechnete Hologrammfunktionen $h_k$ erneut berechnet werden.

7. Verfahren nach Anspruch 5 oder 6,
   bei dem die wiederholung der Berechnung weiterer Hologramme $h_k$ des Schichtaufbaus dann beendet wird, wenn der Fehler, der sich aus dem berechneten in der Rekonstruktionsebene vorliegenden Lichtfeld $A_R'$ und dem ursprünglich in die Berechnung eingegebenen Lichtfeld $A_R$ ergibt, unterhalb einer Fehlerbedingung liegt.

8. Verfahren nach Anspruch 1 bis 7,

   - bei dem für m verschiedene Auslesekonfigurationen, mit m als ganze Zahl größer gleich 2, die Hologrammfunktionen $h_i^j$, j=1..m, berechnet werden und
   - bei dem die Hologrammfunktion $h_i$ aus der Summe der m Hologrammfunktionen $h_i^j$ berechnet wird.

9.  Verfahren nach Anspruch 1 bis 7,

    -   bei dem für eine erste von m Auslesekonfigurationen, mit m als ganze Zahl größer gleich 2, die Hologramm-funktion $h_i{}^1$ berechnet und durch Wiederholung der Berechnung für mindestens eine weitere Hologrammfunktion $h_k$ optimiert wird und
    -   bei dem für jede weitere Auslesekonfiguration die zuvor berechneten Hologrammfunktionen $h_k$ mit $k \neq i$ beibehalten werden und die Hologrammfunktion $h_i{}^j$, $1 < j \leq m$, berechnet und durch Wiederholung der Berechnung für mindestens ein weiteres Hologramm $h_k$ optimiert wird.

10. Verfahren nach Anspruch 1 bis 7,

    -   bei dem für m verschiedene Auslesekonfigurationen, mit m als ganze Zahl größer gleich 2, die Hologramm-funktionen $h_i{}^1$ ... $h_i{}^m$ berechnet werden und
    -   bei dem die Hologrammfuncticm $h_i$ aus räumlich getrennten Abschnitten der einzelnen Hologrammfunktionen $h_i{}^j$ zusammengesetzt wird.

11. Verfahren nach einem der Ansprüche 8 bis 10,
    bei dem für verschiedene Auslesekonfigurationen unterschiedliche Winkel, unterschiedliche Wellenlängen, unterschiedliche Amplitudenverteilungen und/oder unterschiedliche Phasen des Auslesestrahls verwendet werden.

12. Verfahren nach Anspruch 11,
    bei dem die Hologramme $h_k$ so berechnet werden, dass diese für eine Beleuchtung in unterschiedliche Ausbreitungsrichtungen des Auslesestrahls verschiedene Rekonstruktionen ergeben.

13. Verfahren nach Anspruch 12,
    bei dem sich die Ausbreitungsrichtungen zweier Auslesestrahlen um mindestens 91° bis 269° unterscheiden.

14. Verfahren nach einem der Ansprüche 1 bis 13,
    bei dem der minimale Abstand $\Delta z_{min}$ zwischen zwei verschiedenen Hologrammen $h_k$ des Mehrschichthologramms durch die Bedingung:

$$\Delta z_{min} = \frac{ds}{\tan\alpha}$$

bestimmt wird, wobei ds die geometrische Abmessung eines Pixels des digitalen Hologramms ist und wobei der Winkel $\alpha$ der Winkel der ersten Beugungsordnung ist und von der wellenlänge abhängig ist.

15. Verfahren nach einem der Ansprüche 1 bis 14,
    bei dem der maximale Abstand $\Delta z_{max}$ zwischen zwei verschiedenen Hologrammen $h_k$ des Mehrschichthologramms durch die Bedingung:

$$\Delta z_{max} = \frac{\Delta x}{2 \tan\alpha}$$

bestimmt wird, wobei $\Delta x$ die geometrische Abmessung eines Hologrammelementes ist und wobei der Winkel $\alpha$ der Winkel der ersten Beugungsordnung ist und von der Wellenlänge abhängig ist.

16. Verfahren nach einem der Ansprüche 1 bis 15,

    -   bei dem aus mindestens einer einzelnen der vorhandenen Hologrammfunktionen $h_k$ auslesbare Informationen rekonstruiert werden und
    -   bei dem aus den verbleibenden Hologrammen nur in Kombination aller Hologramme auslesbare Informationen rekonstruiert werden.

17. Verfahren nach einem der Ansprüche 1 bis 15,
    bei dem die n-1 vorgegebenen Hologrammfunktionen $h_k$ zufällig gewählt werden und keine aus sich heraus rekonstruierbaren Informationen enthalten.

**18.** Verfahren nach Anspruch 17,
bei dem n-1 Hologrammfunktionen $h_k$ als jeweils zufällig gewähltes Phasenmuster vorgegeben werden und bei dem das i-te Hologramm als n-1 fach XOR-verschlüsselte Hologrammfunktion $h_i$ berechnet wird.

**19.** Verfahren nach einem der Ansprüche 1 bis 18,
bei dem die Hologrammfunktion $h_i$ einer ersten Schicht so definiert wird, dass das sichtbare Muster dieser Schicht in Form eines Klartextes erscheint.

**20.** Verfahren nach einem der Ansprüche 1 bis 19,

- bei dem eine zumindest teilweise reflektierende Schicht im Schichtaufbau vorgegeben wird,
- bei dem eine Rekonstruktion $R_1$ für den reflektierten Anteil des Auslesestrahls vorgegeben wird, und
- bei dem unter Berücksichtigung des zumindest teilweise reflektierten Auslesestrahls die Hologrammfunktion $h_i$ berechnet wird.

**21.** Verfahren nach Anspruch 20,

- bei dem eine Rekonstruktion $R_2$ für den transmittierten Anteil des Auslesestrahls vorgegeben wird und
- bei dem die Hologrammfunktion $h_i$ zusätzlich auch für den transittierten Anteil des Auslesestrahls berechnet wird.

**22.** Verfahren nach einem der Ansprüche 1 bis 21,

- bei dem für eine ausgewählte Hologrammschicht mit k=j mindestens zwei verschiedene Hologrammfunktionen $h_j^1$ und $h_j^2$ vorgegeben werden und
- bei dem die Berechnung der i-ten Hologrammfunktion für die mindestens zwei verschiedenen Hologramm-funktionen $h_j^1$ und $h_j^2$ berechnet und überlagert werden.

**23.** Verfahren nach einem der Ansprüche 1 bis 22,
bei dem als Hologramme Amplitudenhologramme, Phasenhologramme oder gemischte Amplituden-Phasen-Hologramme verwendet werden.

**24.** Verfahren nach einem der Ansprüche 1 bis 23,
bei dem als Hologramme binäre oder grauwertige Hologramme verwendet werden.

**25.** Verfahren zum Herstellen eines Mehrschichthologramms aus mindestens zwei computergenerierten Hologrammen,

- bei dem die mindestens zwei Hologrammschichten mit einem Verfahren nach einem der Ansprüche 1 bis 24 berechnet werden und
- bei dem die Informationen der mindestens zwei Hologramme jeweils in eine optisch veränderbare Schicht eines Speichermediums eingeschrieben werden,
- wobei die mindestens zwei Schichten den Schichtaufbau des Mehrschichthologramms bilden.

**26.** Verfahren nach Anspruch 25,
bei dem die Hologramme in mindestens zwei verschiedene Bereiche des Speichermediums eingeschrieben werden.

**27.** Verfahren nach Anspruch 25,
bei dem die Hologramme in mindestens zwei verschiedene Speichermedien eingeschrieben werden.

**28.** Verfahren nach Anspruch 27, bei dem die mindestens zwei verschiedenen Speichermedien zu einer Gesamtheit zusammengefügt werden.

**29.** Verfahren nach einem der Anspruch 25 bis 28,
bei dem jeweils mindestens eine Hologrammschicht in eine Polymerfolie als Speichermedium eingeschrieben wird.

**30.** Verfahren nach Anspruch 29,

- bei dem jede von mindestens zwei Polymerfolien zunächst einzeln mit mindestens einer Hologrammschicht beschrieben wird und
- bei dem anschließend die mindestens zwei Polymerfolien zu einem Schichtaufbau zusammengefügt, insbesondere verklebt werden.

31. Verfahren nach Anspruch 29,

- bei dem zunächst mindestens zwei Polymerfolien zu einem Schichtaufbau zusammengefügt, insbesondere verklebt werden und
- bei dem anschließend die mindestens zwei zusammengefügten Polymerfolien schichtweise beschrieben werden.

32. Verfahren nach einem der Ansprüche 25 bis 31,
bei dem mindestens eine Schicht mit einer sichtbaren Klartextinformation eingeschrieben wird.

33. Verfahren nach einem der Ansprüche 25 bis 32,
bei dem eine zumindest teilweise reflektierende Schicht eingefügt wird.

34. Verfahren nach einem der Ansprüche 25 bis 33,
bei dem mindestens eine Schicht mit zeitlich veränderbaren optischen Eigenschaften eingefügt wird.

35. Verfahren zum Auslesen eines Mehrschichthologramms,

- bei dem ein Speichermedium mit einem computergenerierten Mehrschichthologramm in einem Strahlengang eines Auslesestrahls angeordnet wird, wobei das Mehrschichthologramm nach einem der Ansprüche 25 bis 34 hergestellt worden ist und wobei das Mehrschichthologramm mit einem verfahren nach einem der Ansprüche 1 bis 24 berechnet worden ist,
- bei dem die bei der Berechnung des Mehrschichthologramms vorgegebenen Randbedingungen des Auslesestrahls selbst und zwischen dem Auslesestrahl und dem Speichermedium eingestellt werden und
- bei dem in der Rekonstruktionsebene ein optisches Aufnahmemittel angeordnet wird.

36. Verfahren nach Anspruch 35,

- bei dem die Mehrzahl von Hologrammen des Mehrschichthologramms in mindestens zwei verschiedenen Speichermedien angeordnet sind und
- bei dem die Speichermedien entsprechend der in der Berechnung der Hologramme vorgegebenen Randbedingungen zueinander positioniert werden.

37. Verfahren nach Anspruch 35 oder 36,
bei dem mindestens eine der Schichten des Mehrschichthologramms zeitlich veränderbare Amplituden und/oder Phaseninformationen aufweist.

38. Verfahren nach Anspruch 37,
bei dem mit Hilfe eines elektrooptischen Elementes, insbesondere eines LCD-Elementes, variable Amplituden- und Phaseninformationen der mindestens einen Schicht erzeugt werden.

39. Speichermedium für ein computergeneriertes Mehrschichthologramm mit mindestens zwei Hologrammschichten, das mit Hilfe eines Verfahrens nach einem der Ansprüche 25 bis 34 hergestellt ist und das mit einem Verfahren nach einem der Ansprüche 1 bis 24 berechnet worden ist,

- mit mindestens einer optisch veränderbaren Materialschicht,
- wobei in der mindestens einen Materialschicht die mindestens zwei Hologrammschichten des Mehrschichthologramms eingeschrieben sind.

40. Speichermedium nach Anspruch 39,
**dadurch gekennzeichnet,**
**dass** mindestens zwei separate Materialschichten vorgesehen sind, wobei die separaten Materialschichten jeweils mindestens eine Hologrammschicht des Mehrschichthologramms aufweisen.

**41.** Speichermedium nach Anspruch 39,
**dadurch gekennzeichnet,**
**dass** eine Mehrzahl von miteinander verbundenen Schichten aus einem optisch veränderbaren Material vorgesehen ist.

**42.** Speichermedium nach einem, der Ansprüche 39 bis 41,
**dadurch gekennzeichnet,**
**dass** der minimale Abstand von jeweils zwei Hologrammschichten die Bedingung

$$\Delta z_{min} = \frac{ds}{\tan\alpha}$$

erfüllt, wobei ds die geometrische Abmessung eines Pixels des digitalen Hologramms ist und wobei der Winkel $\alpha$ der Winkel der ersten Beugungsordnung ist und von der Wellenlänge abhängig ist.

**43.** Speichermedium nach einem der Ansprüche 39 bis 42,
**dadurch gekennzeichnet,**
**dass** der maximale Abstand $\Delta z_{max}$ zwischen zwei Hologrammschichten die Bedingung:

$$\Delta z_{max} = \frac{\Delta x}{2\tan\alpha}$$

erfüllt, wobei $\Delta x$ die geometrische Abmessung eines Hologrammelementes ist und wobei der Winkel $\alpha$ der Winkel der ersten Beugungsordnung ist und von der Wellenlänge abhängig ist.

**44.** Speichermedium nach einem der Ansprüche 39 bis 43,
**dadurch gekennzeichnet,**
**dass** mindestens eine Schicht eine sichtbare Klartextinformation enthält.

**45.** Speichermedium nach einem der Anspruche 39 bis 44,
**dadurch gekennzeichnet,**
**dass** mindestens eine Schicht zum Erzeugen von zeitlich veränderbaren Amplitudenmustern und/oder Phasenmustern, insbesondere eine optoelektronische Schicht vorgesehen ist.

**Claims**

**1.** A method for the calculation of a computer-generated multilayer hologram with n holograms, whereby n is a whole number greater than or equal to 2,

- wherein field $A_0$ of a readout beam is preset as a mathematical function,
- wherein field $A_R$ is preset in the reconstruction plane,
- wherein the i-th hologram $h_i$ is calculated by means of a method,
- wherein the mathematical functions of the n-1 holograms $h_k$ are preset, whereby k is not equal to i and k and i can assume values between 1 and n,
- wherein field $A_i^-$ in front of the i-th hologram $h_i$ in the beam direction is calculated

    - for i>1 from the combination of field $A_0$ of the readout beam with all the hologram functions $h_k$, with k<i, of holograms $h_k$ arranged in front of the i-th hologram in the beam direction and
    - for i=1 from field $A_0$,

- wherein field $A_i^+$ behind the i-th hologram $h_i$ in the beam direction is calculated back

    - for i<n from the combination of field $A_R$ in the reconstruction plane with all the hologram functions $h_k$, with k>i, of holograms $h_k$ arranged behind the i-th hologram $h_i$ in the beam direction and
    - for i=n from field $A_R$, and

- wherein hologram function $h_i$ is calculated as a quotient from the fields $A_i^+/A_i^-$.

**2.** The method according to claim 1,
wherein the value fore $h_i$ is assigned with an arbitrary value point by point if the value of $A_i^-$ is equal to zero at this grid point.

**3.** The method according to claim 1 or claim 2,
wherein the hologram function $h_i$ of the i-th hologram $h_i$ to be calculated is calculated coded, in particular quantized, preferably binary quantized.

**4.** The method according to claim 3,

- wherein the calculated function $h_i$ is picked off at the grid points and compared with a threshold value and
- wherein coded value $h_i'$ is set equal to zero when function $h_i$ lies below the threshold value, and is otherwise set equal to one.

**5.** The method according to one of the claims 1 to 4,

- wherein all hologram functions $h_k$ except for $k=j\neq i$ are retained and fields $A_j^+$ and $A_j^-$ are recalculated according to claim 1 and
- wherein hologram function $h_j$ is recalculated according to claim 1.

**6.** The method according to claim 5,
wherein hologram functions $h_k$ already calculated once are also recalculated.

**7.** The method according to claim 5 or claim 6,
wherein the repetition of the calculation of further holograms $h_k$ of the layer structure is ended when the error, which results from the calculated field $A_R'$ present in the reconstruction plane and field $A_R$ originally inputted into the calculation, lies below an error condition.

**8.** The method according to one of the claims 1 to 7,

- wherein hologram functions $h_i^j$, j=l..m, are calculated for m different readout configurations, with m as a whole number greater than or equal to 2 and
- wherein hologram function $h_i$ is calculated from the sum of the m hologram functions $h_i^j$.

**9.** The method according to one of the claims 1 to 7,

- wherein, for a first of m readout configurations, with m as a whole number greater than or equal to 2, hologram function $h_i^1$ is calculated and optimised by repetition of the calculation for at least one further hologram function $h_k$ and
- wherein, for each further readout configuration, the previously calculated hologram functions $h_k$ with $k\neq i$ are retained and hologram function $h_i^j$, $1<j\leq m$, is calculated and optimised by repetition of the calculation for at least one further hologram $h_k$.

**10.** The method according to are of the claims 1 to 7,

- wherein hologram functions $h_i^1$ ... $h_i^m$ are calculated for m different readout configurations, with m as a whole number greater than or equal to 2 and
- wherein hologram function $h_i$ is composed of spatially separated sections of the individual hologram functions $h_i^j$.

**11.** The method according to one of the claims 8 to 10,
wherein different angles, different wavelengths, different amplitude distributions and/or different phases of the readout beam are used for different readout configurations.

**12.** The method according to claim 11,
wherein holograms $h_k$ are calculated such that they produce different reconstructions for illumination in different propagation directions of the readout beam.

**13.** The method according to claim 12,
wherein the propagation directions of two readout beams differ by at least 91° to 269°.

**14.** The method according to one of the claim 1 to 13,
wherein minimum spacing $\Delta z_{min}$ between two different holograms $h_k$ of the multilayer hologram is determined by the condition:

$$\Delta z_{min} = \frac{ds}{\tan\alpha}$$

whereby ds is the geometrical dimension of a pixel of the digital hologram and wherein angle $\alpha$ is the angle of the first diffraction order and is dependent on the wavelength.

**15.** The method according to one of the claims 1 to 14,
wherein maximum spacing $\Delta z_{max}$ between two different holograms $h_k$ of the multilayer hologram is determined by the condition:

$$\Delta z_{max} = \frac{\Delta x}{2 \tan\alpha}$$

whereby $\Delta x$ is the geometrical dimension of a hologram element and whereby angle $\alpha$ is the angle of the first diffraction order and is dependent on the wavelength.

**16.** The method according to one of the claims 1 to 15,

- wherein readable information can be reconstructed from at least one individual of the available hologram functions $h_k$ and
- wherein readable information can be reconstructed from the remaining holograms solely in a combination of all the holograms.

**17.** The method according to one of the claims 1 to 15,
wherein the n-1 preset hologram functions $h_k$ are selected randomly and contain no information that can be reconstructed by itself.

**18.** The method according to claim 17,
wherein n-1 hologram functions $h_k$ are each preset as a randomly selected phase pattern and wherein the i-th hologram is calculated as n-1-fold XOR-coded hologram function $h_i$.

**19.** The method according to one of the claims 1 to 18,
wherein hologram function $h_i$ of a first layer is defined such that the visible pattern of this layer appears in the form of a plain text.

**20.** The method according to one of the claims 1 to 19,

- wherein an at least partially reflecting layer is specified in the layer structure,
- wherein a reconstruction $R_1$ is preset for the reflecting part of the readout beam, and
- wherein hologram function $h_i$ is calculated taking account of the at least partially reflecting readout beam.

**21.** The method according to claim 20,

- wherein a reconstruction $R_2$ is preset for the transmitted part of the readout beam and
- wherein hologram function $h_i$ is also calculated for the transmitted part of the readout beam.

**22.** The method according to one of the claims 1 to 21,

- wherein at least two different hologram functions $h_j^1$ and $h_j^2$ are preset for a selected hologram layer with k=j and
- wherein the calculation of the i-th hologram function is calculated and superimposed for the at least two different

hologram functions $h_j^1$ and $h_j^2$.

23. The method according to one of the claims 1 to 22,
wherein amplitude holograms, phase holograms or mixed amplitude-phase holograms are used as holograms.

24. The method according to one of the claims 1 to 23,
wherein binary and grey-scale-value holograms are used as holograms.

25. A method for producing a multilayer hologram from at least two computer-generated holograms,

- wherein the at least two hologram layers are calculated in particular using a method according to any one of claims 1 to 24,
- wherein the pieces of information of the at least two holograms are each written into an optically variable layer of a storage medium, and
- wherein the at least two layers form the layer structure of the multilayer hologram.

26. Method according to claim 25,
wherein the holograms are written into at least two different areas of said storage medium.

27. The method according to claim 25,
wherein the holograms are written into at least two different storage media.

28. The method according to claim 27,
wherein the at least two different storage media are joined together to form a whole.

29. The method according to one of the claims 25 to 28,
wherein at least one hologram layer is written into a polymer film as a storage medium.

30. The method according to claim 29,

- wherein each of at least two polymer films are first written individually with at least one hologram layer and
- wherein the at least two polymer films are then joined together, in particular glued, to form a layer structure.

31. The method according to claim 29,

- wherein at least two polymer films are first joined together, in particular glued, to form a layer structure and
- wherein the at least two polymer films joined together are then written in layer by layer.

32. The method according to one of the claims 25 to 31,
wherein at least one layer with visible plain-text information is written in.

33. The method according to one of the claims 25 to 32,
wherein an at least partially reflecting layer is inserted.

34. The method according to one of the claims 25 to 33,
wherein at least one layer with temporally variable optical properties is inserted.

35. A method for reading out a multilayer hologram,

- wherein a storage medium with a computer-generated multilayer hologram is arranged in a beam path of a readout beam, whereby the multilayer hologram has been produced according to one of the claims 25 to 34 and whereby the multilayer hologram has been calculated by a method according to one of the claims 1 to 24,
- wherein the boundary conditions of the readout beam preset in the calculation of the multilayer hologram are adjusted themselves and between the readout beam and the storage medium, and
- wherein optical recording means are arranged in the reconstruction plane.

36. The method according to claim 35,

- wherein the plurality of holograms of the multilayer hologram are arranged in at least two different storage media and
- wherein the storage media are positioned with respect to one another according to the boundary conditions preset in the calculation of the holograms.

37. The method according to claim 35 or 36,
    wherein at least one of the layers of the multilayer hologram exhibits temporally variable amplitudes and/or phase information.

38. The method according to claim 37,
    wherein variable amplitude and phase information of the at least one layer is generated with the aid of an electro-optical element, in particular an LCD element.

39. A storage medium for a computer-generated multilayer hologram with at least two hologram-layers, which is produced with the aid of a method according to one of the claims 25 to 34 and which has been calculated by a method according to one of the claims 1 to 24,

    - with at least one optically variable material layer,
    - wherein the at least two hologram-layers of the multilayer hologram are written into the at least one material layer.

40. The storage medium according to claim 39,
    **characterised in that**
    at least two separate material layers are provided, whereby the separate material layers each have at least one hologram layer of the multilayer hologram.

41. The storage medium according to claim 39,
    **characterised in that**
    a plurality of layers of an optically variable material joined to one another is provided.

42. The storage medium according to one of the claims 39 to 41,
    **characterised in that**
    the minimum spacing of two respective hologram-layers meets the condition:

$$\Delta z_{min} = \frac{ds}{\tan\alpha}$$

whereby ds is the geometrical dimension of a pixel of the digital hologram and whereby angle $\alpha$ is the angle of the first diffraction order and is dependent on the wavelength.

43. The storage medium according to one of the claims 39 to 42,
    **characterised in that**
    the maximum spacing $\Delta z_{max}$ between two hologram-layers meets the condition:

$$\Delta z_{max} = \frac{\Delta x}{2\tan\alpha}$$

whereby $\Delta x$ is the geometrical dimension of a hologram element and whereby angle $\alpha$ is the angle of the first diffraction order and is dependent on the wavelength.

44. The storage medium according to one of the claims 39 to 43,
    **characterised in that**
    at least one layer contains visible plain-text information.

45. The storage medium according to one of the claims 39 to 44,
    **characterised in that**
    at least one layer is provided for the generation of temporally variable amplitude patterns and/or phase patterns, in particular an opto-electronic layer.

**Revendications**

1. Procédé pour calculer un hologramme à plusieurs couches généré par ordinateur doté de n hologrammes, n étant un nombre entier égal à ou supérieur à deux

   - dans lequel le champ lumineux $A_0$ d'un faisceau de lecture est prédéfini comme fonction mathématique,
   - dans lequel le champ lumineux $A_R$ est prédéfini dans le plan de reconstruction,
   - dans lequel le i-ème hologramme $h_i$ est calculé par un procédé,
   - dans lequel les fonctions mathématiques des n-1 hologrammes $h_k$ sont prédéfinies, k étant différent de i et k et i pouvant prendre des valeurs situées entre 1 et n,
   - dans lequel le champ lumineux $A_i^-$ est calculé avant le i-ème hologramme $h_i$ dans la direction du rayonnement

      - pour i>1 à partir de la combinaison du champ lumineux $A_0$ du faisceau de lecture avec toutes les fonctions holographiques $h_k$, avec k<i, des hologrammes $h_k$ agencés avant le i-ème hologramme dans la direction du rayonnement et
      - pour i=1 à partir du champ lumineux $A_0$

   - dans lequel le champ lumineux $A_i^+$ est rétrocalculé après le i-ème hologramme $h_i$ dans la direction du rayonnement

      - pour i<n à partir de la combinaison du champ lumineux $A_R$ dans le plan de reconstruction avec toutes les fonctions d'hologramme $h_k$, avec k>i, des hologrammes $h_k$ agencés avant le i-ème hologramme $h_i$ dans la direction du rayonnement et
      - pour i=n à partir du champ lumineux $A_R$, et

   - dans lequel le fonction holographique $h_i$ est calculée comme le quotient des champs lumineux $A_i^+ / A_i^-$.

2. Procédé selon la revendication 1,
   dans lequel la valeur de $h_i$ est affectée ponctuellement d'une valeur quelconque si la valeur de $A_i^-$ sur ce point de trame est égale à zéro.

3. Procédé selon la revendication 1 ou 2,
   dans lequel la fonction holographique $h_i$ du i-ème hologramme $h_i$ à calculer est codée, en particulier quantifiée, de préférence quantifiée en binaire.

4. Procédé selon la revendication 3,

   - dans lequel la fonction $h_i$ calculée est prise sur les points de trame et comparée avec une valeur seuil et
   - dans lequel la valeur codée $h_i^1$ est ensuite mise à zéro si la fonction $h_i$ est au-dessous de la valeur seuil, et mise à un sinon.

5. Procédé selon l'une des revendications 1 à 4,

   - dans lequel toutes les fonctions holographiques $h_k$ jusqu'à k = j ≠ i sont conservées et les champs lumineux $A_j^+$ et $A_j^-$ recalculés comme dans la revendication 1, et
   - dans lequel la fonction holographique $h_j$ est recalculée comme dans la revendication 1.

6. Procédé selon la revendication 5,
   dans lequel les fonctions holographiques $h_k$ déjà calculées une fois sont aussi recalculées.

7. Procédé selon la revendication 5 ou 6,
   dans lequel la répétition du calcul d'autres hologrammes $h_k$ de la structure laminaire est arrêtée si l'erreur qui résulte du champ lumineux $A_R^1$ calculé présent dans le plan de reconstruction, et du champ lumineux $A_R$ entré initialement dans le calcul est au-dessous d'une condition d'erreur.

8. Procédé selon les revendications 1 à 7,

   - dans lequel, pour m configurations de lecture différentes, m étant un nombre entier égal ou supérieur à 2, les

fonctions holographiques $h_i^j$, j=1 à m, sont calculées, et

- dans lequel la fonction holographique $h_i$ est calculée à partir de la somme des m fonctions holographiques $h_i^j$.

**9.** Procédé selon les revendications 1 à 7,

- dans lequel, pour une première parmi m configurations de lecture, m étant un nombre entier égal ou supérieur à 2, la fonction holographique $h_i^1$ est calculée et optimisée par la répétition du calcul pour au moins une autre fonction holographique $h_k$, et
- dans lequel pour chaque configuration de lecture suivante, les fonctions holographiques $h_k$ avec k≠i précédemment calculées sont conservées et la fonction holographique $h_i^j$, 1<j≤m, est calculée et optimisée par la répétition du calcul pour au moins un hologramme $h_k$ suivant.

**10.** Procédé selon les revendications 1 à 7,

- dans lequel, pour m configurations de lecture différentes, m étant un nombre entier égal ou supérieur à 2, les fonctions holographiques $h_i^1$ à $h_i^m$ sont calculées, et
- dans lequel la fonction holographique $h_i$ est assemblée à partir de segments séparés dans l'espace des différentes fonctions holographiques $h_i^j$.

**11.** Procédé selon l'une des revendications 8 à 10,
dans lequel, pour différentes configurations de lecture sont utilisés des angles différents, des longueurs d'onde différentes, des distributions d'amplitude différentes et/ou des phases différentes du faisceau de lecture.

**12.** Procédé selon la revendication 11,
dans lequel les hologrammes $h_k$ sont calculés de telle sorte qu'avec un éclairage dans différentes directions de propagation du faisceau de lecture, ceux-ci donnent lieu à des reconstructions différentes.

**13.** Procédé selon la revendication 12,
dans lequel les directions de propagation de deux faisceaux de lecture divergent d'au moins 91° à 269°.

**14.** Procédé selon l'une des revendications 1 à 13,
dans lequel la distance minimale $\Delta z_{min}$ entre deux hologrammes $h_k$ différents de l'hologramme à plusieurs couches est déterminée par la condition :

$$\Delta z_{min} = ds / \tan\alpha,$$

où ds est la dimension géométrique d'un pixel de l'hologramme numérique et l'angle $\alpha$ est l'angle du premier ordre de diffraction et dépend de la longueur d'onde.

**15.** Procédé selon l'une des revendications 1 à 14,
dans lequel la distance minimale $\Delta z_{max}$ entre deux hologrammes $h_k$ différents de l'hologramme à plusieurs couches est déterminée par la condition :

$$\Delta z_{max} = \Delta x / 2 \tan\alpha,$$

où $\Delta x$ est la dimension géométrique d'un élément d'hologramme et l'angle $\alpha$ est l'angle du premier ordre de diffraction et dépend de la longueur d'onde.

**16.** Procédé selon l'une des revendications 1 à 15,

- dans lequel des informations lisibles sont reconstruites à partir d'au moins une des fonctions holographiques $h_k$ présentes, et
- dans lequel des informations lisibles sont reconstruites à partir des hologrammes restants uniquement dans une combinaison de tous les hologrammes.

**17.** Procédé selon l'une des revendications 1 à 15,

dans lequel les fonctions holographiques $h_k$ prédéfinies comme dans la revendication 1 sont sélectionnées de manière aléatoire et ne contiennent pas d'informations reconstructibles à partir d'elles.

18. Procédé selon la revendication 17,
dans lequel n-1 fonctions holographiques $h_k$ sont prédéfinies comme des modèles de phase sélectionnés de manière aléatoire et dans lequel le i-ème hologramme est calculé comme fonction holographique $h_i$ combinée n-1 fois avec une fonction de non-équivalence.

19. Procédé selon l'une des revendications 1 à 18,
dans lequel la fonction holographique $h_i$ d'une première couche est définie de sorte que le modèle visible de cette couche apparaît en clair.

20. Procédé selon l'une des revendications 1 à 19,

- dans lequel une couche au moins partiellement réfléchissante est prédéfinie dans la structure laminaire,
- dans lequel une reconstruction $R_1$ est prédéfinie pour la partie réfléchissante du faisceau de lecture, et
- dans lequel la fonction holographique $h_i$ est calculée en tenant compte du faisceau de lecture au moins partiellement réfléchissant.

21. Procédé selon la revendication 20,

- dans lequel une reconstruction $R_2$ est prédéfinie pour la partie transmise du faisceau de lecture, et
- dans lequel la fonction holographique $h_i$ est calculée aussi pour la partie transmise du faisceau de lecture.

22. Procédé selon l'une des revendications 1 à 21,

- dans lequel au moins deux fonctions holographiques différentes $h_j{}^1$ et $h_j{}^2$ sont prédéfinies pour une couche holographique sélectionnée avec k=j, et
- dans lequel le calcul de la i-ème fonction holographique est calculé et superposé pour les au moins deux fonctions holographiques différentes $h_j{}^1$ et $h_j{}^2$.

23. Procédé selon l'une des revendications 1 à 22,
dans lequel sont utilisés comme hologrammes des hologrammes d'amplitude, des hologrammes de phase ou des hologrammes mixtes amplitude-phase.

24. Procédé selon l'une des revendications 1 à 23,
dans lequel sont utilisés comme hologrammes des hologrammes binaires ou des hologrammes en niveaux de gris.

25. Procédé pour produire un hologramme à plusieurs couches à partir d'au moins deux hologrammes générés par ordinateur

- dans lequel les au moins deux couches holographiques sont calculées avec un procédé selon l'une des revendications 1 à 24, et
- dans lequel les informations des au moins deux hologrammes sont enregistrées pour chacun dans une couche variable optiquement d'un support d'enregistrement,
- les au moins deux couches formant la structure laminaire de l'hologramme à plusieurs couches.

26. Procédé selon la revendication 25,
dans lequel les hologrammes sont enregistrés dans au moins deux secteurs différents du support d'enregistrement.

27. Procédé selon la revendication 25,
dans lequel les hologrammes sont enregistrés dans au moins deux supports d'enregistrement différents.

28. Procédé selon la revendication 27,
dans lequel les au moins deux supports d'enregistrement différents sont réunis en une unité.

**29.** Procédé selon l'une des revendications 25 à 28,
dans lequel au moins une couche holographique est enregistrée dans un film polymère en guise de support d'enregistrement.

**30.** Procédé selon la revendication 29,

- dans lequel chacun d'au moins deux films polymères est d'abord écrit séparément avec au moins une couche holographique, et
- dans lequel au moins deux films polymères sont ensuite assemblés en une structure laminaire, en particulier collés.

**31.** Procédé selon la revendication 29,

- dans lequel les au moins deux films polymères sont d'abord assemblés en une structure laminaire, en particulier collés, et
- dans lequel les au moins deux films polymères assemblés sont ensuite écrits par couche.

**32.** Procédé selon l'une des revendications 25 à 31,
dans lequel au moins une couche est écrite avec des informations en clair visibles.

**33.** Procédé selon l'une des revendications 25 à 32,
dans lequel une couche au moins partiellement réfléchissante est insérée.

**34.** Procédé selon l'une des revendications 25 à 33,
dans lequel au moins une couche avec des propriétés optiques variables dans le temps est insérée.

**35.** Procédé pour lire un hologramme à plusieurs couches,

- dans lequel un support d'enregistrement avec un hologramme à plusieurs couches généré par ordinateur est agencé dans une trajectoire de faisceau d'un faisceau de lecture, l'hologramme à plusieurs couches ayant été produit selon l'une des revendications 25 à 34 et l'hologramme à plusieurs couches ayant été calculé selon l'une des revendications 1 à 24,
- dans lequel les conditions marginales du faisceau de lecture lui-même et entre le faisceau de lecture et le support d'enregistrement prédéfinies lors du calcul de l'hologramme à plusieurs couches sont appliquées, et
- dans lequel un moyen d'enregistrement optique est enregistré dans le plan de reconstruction.

**36.** Procédé selon la revendication 35,

- dans lequel la pluralité d'hologrammes de l'hologramme à plusieurs couche sont agencés dans au moins deux supports d'enregistrement différents, et
- dans lequel les supports d'enregistrement sont positionnés l'un par rapport à l'autre en fonction des conditions marginales prédéfinies dans le calcul des hologrammes.

**37.** Procédé selon les revendications 35 ou 36,
dans lequel au moins une des couches de l'hologramme à plusieurs couches possède des informations d'amplitude et/ou de phase variables dans le temps.

**38.** Procédé selon la revendication 37,
dans lequel des informations d'amplitude et/ou de phase variables de l'au moins une couche sont générées à l'aide d'un élément optoélectronique, en particulier d'un élément d'écran à cristaux liquides.

**39.** Support d'enregistrement pour un hologramme à plusieurs couches doté d'au moins deux couches holographiques généré par ordinateur, qui a été produit selon l'une des revendications 25 à 34 et calculé selon l'une des revendications 1 à 24,

- avec au moins une couche de matériau variable optiquement,
- les au moins deux couches holographiques de l'hologramme à plusieurs couches étant enregistrées dans l'au moins une couche de matériau.

**40.** Support d'enregistrement selon la revendication 39,
**caractérisé en ce qu'**
au moins deux couches de matériau séparées sont prévues, les couches de matériau séparées présentant chacune au moins une couche holographique de l'hologramme à plusieurs couches.

**41.** Support d'enregistrement selon la revendication 39,
**caractérisé en ce que**
sont prévues une multitude de couches liées entre elles en matériau variable optiquement.

**42.** Support d'enregistrement selon l'une des revendications 39 à 41,
**caractérisé en ce que**
la distance minimale entre deux couches holographiques remplit la condition

$$\Delta z_{min} = ds / \tan\alpha,$$

où ds est la dimension géométrique d'un pixel de l'hologramme numérique et l'angle $\alpha$ est l'angle du premier ordre de diffraction et dépend de la longueur d'onde.

**43.** Support d'enregistrement selon l'une des revendications 39 à 42,
**caractérisé en ce que**
la distance maximale $\Delta z_{max}$ entre deux couches holographiques remplit la condition

$$\Delta z_{max} = \Delta x / 2 \tan\alpha,$$

où $\Delta x$ est la dimension géométrique d'un élément d'hologramme et l'angle $\alpha$ est l'angle du premier ordre de diffraction et dépend de la longueur d'onde.

**44.** Support d'enregistrement selon l'une des revendications 39 à 43,
**caractérisé en ce qu'**
au moins une couche contient des informations en clair visibles.

**45.** Support d'enregistrement selon l'une des revendications 39 à 44,
**caractérisé en ce qu'**
au moins une couche pour générer des modèles d'amplitude et/ou des modèles de phase variables dans le temps est prévue, en particulier une couche optoélectronique.

Fig.1

Fig.2

Fig.3

Fig.4

Fig.5

Fig.6

Fig.7

a)

b)

Fig.8

a)

b)

**Fig.9**

Fig.10